(19) Europäisches Patentamt
European Patent Office
Office européen des brevets

(11) EP 3 802 739 B1

(12) EUROPEAN PATENT SPECIFICATION

(45) Date of publication and mention of the grant of the patent:
**30.03.2022 Bulletin 2022/13**

(21) Application number: **19727006.9**

(22) Date of filing: **28.05.2019**

(51) International Patent Classification (IPC):
***C10G 3/00*** *(2006.01)* ***C11C 3/12*** *(2006.01)*
***C11C 1/08*** *(2006.01)* ***C11C 1/04*** *(2006.01)*
***C07C 51/00*** *(2006.01)* ***C10G 45/58*** *(2006.01)*
***C10G 47/00*** *(2006.01)* ***C10G 9/36*** *(2006.01)*
***C10G 69/06*** *(2006.01)* ***C10G 31/06*** *(2006.01)*
***C10G 1/06*** *(2006.01)*

(52) Cooperative Patent Classification (CPC):
**C10G 3/42; C10G 1/065; C10G 3/50; C10G 9/36; C10G 31/06; C10G 45/58; C10G 47/00; C10G 69/06; C11C 1/08;** C10G 2300/1011; C10G 2300/4012; C10G 2400/02; C10G 2400/06; C10G 2400/08; Y02P 30/20

(86) International application number:
**PCT/EP2019/063752**

(87) International publication number:
**WO 2019/229035 (05.12.2019 Gazette 2019/49)**

# (54) HYDRODYNAMIC CAVITATION PROCESS TO PROTECT CATALYTIC PROCESSES USED TO DEOXYGENATE COMPLEX MIXTURES OF NATURAL OCCURRING FATS & OILS INTO OXYGEN-FREE HYDROCARBONS

VERFAHREN ZUR HYDRODYNAMISCHEN KAVITATION ZUM SCHUTZ KATALYTISCHER VERFAHREN ZUR DESOXIGENIERUNG KOMPLEXER GEMISCHE VON NATÜRLICH VORKOMMENDEN FETTE UND ÖLEN IN SAUERSTOFFFREIEN KOHLENWASSERSTOFFEN

PROCÉDÉ DE CAVITATION HYDRODYNAMIQUE POUR PROTÉGER DES PROCESSUS CATALYTIQUES DE DÉSOXYGÉNATION DE MÉLANGES COMPLEXES D’HUILES ET DE GRAISSES NATURELLES EN HYDROCARBURES EXEMPTS D’OXYGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2018 EP 18175266**

(43) Date of publication of application:
**14.04.2021 Bulletin 2021/15**

(73) Proprietor: **TotalEnergies One Tech Belgium**
**7181 Seneffe (BE)**

(72) Inventors:
- **VERMEIREN, Walter**
**3530 Houthalen (BE)**
- **ADAM, Cindy**
**5100 Wierde (BE)**

(74) Representative: **Raboin, Jean-Christophe**
**Total Research & Technology Feluy**
**Zone Industrielle C**
**7181 Seneffe (BE)**

(56) References cited:
**US-A1- 2009 314 688**
**US-A1- 2015 141 715**
**US-A1- 2015 210 949**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 802 739 B1

## Description

[Field of the invention]

The present invention relates to the production of bio-products, in particular bio-paraffins, bio-LPG, bio-naphtha, bio-jet and bio-distillates in an integrated biorefinery from complex mixtures of natural occurring fats & oils. The need to reduce emission of fossil based carbon dioxides has prompted the search for alternative processes for producing hydrocarbon products such as bio-LPG, bio-naphtha, bio-jet and bio-distillates.

In the following, "bio-diesel" is sometimes referred to as "bio-distillates" and bio-jet to as biokerosene.

The present invention also relates to the production of base chemicals (paraffins, light olefins, dienes and aromatics) from natural resources. In particular, the present invention relates to a process for the conversion of bio-feedstock comprising fatty acid esters (FAE), free fatty acids (FFA) into dihydrogen, bioparaffins, bio-olefins (ethylene, propylene and butenes), bio-dienes (butadiene, isoprene, piperylene, cyclopentadiene etc), bio-aromatics (benzene, toluene and xylenes), bio-gasoline, bio-LPG.

The present invention also relates to the production of hydrocarbon-based special fluids from natural resources. In particular, the present invention relates to a process for the conversion of bio-feedstock comprising fatty acid esters (FAE), free fatty acids (FFA) into propellant, paraffinic solvents and cooling fluids.

[Background of the invention]

Made from renewable sources, bio-distillates as an alternative fuel for diesel engines are becoming increasingly important. In addition to meeting engine performance and emissions criteria/specifications, bio-distillates have to compete economically with petroleumdistillates and should not compete with food applications for the same triglycerides. Vegetable oils partially or fully refined and of edible-grade quality are currently predominant feedstock for bio-diesel production. The prices of these oils are relatively high for fuel-grade commodities.

These considerations have led to efforts to identify less expensive materials that could serve as feedstock for bio-diesel production and to design chemical processes for their conversion. Thus, animal fats have been converted to bio-diesel [C. L. Peterson, D. L. Reece, B. L. Hammond, J. Thompson, S. M. Beck, "processing, characterization and performance of eight fuels from lipids", Applied Engineering in Agriculture. Vol. 13(1), 71-79, 1997; F. Ma, L.D. Clements and M.A. Hanna, "The effect of catalyst, free fatty acids and water on transesterification of beef tallow", Trans ASAE 41 (5) (1998), pp. 1261-1264], and substantial efforts have been devoted to the development of waste restaurant grease [M. Canakci and J. Van Gerpen, "Bio-distillates production from oils and fats with high free fatty acids", Trans. ASAE 44 (2001), pp. 1429-1436; Y. Zhang, M.A. Dube, D.D. McLean and M. Kates, "Bio-distillates production from waste cooking oil. 1. Process design and technological assessment", Bioresour. Technol. 89 (2003), pp. 1-16; W.-H. Wu, T.A. Foglia, W.N. Marmer, R.O. Dunn, C.E. Goering and T.E. Briggs, J. Am. Oil Chem. Soc. 75 (1998) (9), p. 1173], largely the spent product of the deep fat frying of foods, as a bio-diesel feedstock.

The industrial chemistry of fats & oils is a mature technology, with decades of experience and continuous improvements over current practices. Natural fats & oils, such as vegetable oils, animal fats, consist mainly of glycerides (mono-, di- but mainly triglycerides), and to some extent of free fatty acids (FFA). Many different types of triglycerides are produced in nature, either from vegetable as from animal origin. Most of acyl-moieties in fats & oils are found esterified to glycerol (triacylglycerol). The acyl-group is a long-chain ($C_{10}$-$C_{24}$) hydrocarbon with a carboxyl-group at the end that is generally esterified with glycerol. Fats & oils are characterized by the chemical composition and structure of its fatty acid moiety. The fatty acid moiety can be saturated or contain one or more double bonds. Bulk properties of fats & oils are often specified as "saponification number", "Iodine Value", "unsaponification number".

Some typical sources of fats & oils and respective composition (wt%) in fatty acids (fatty acid esters or free fatty acids) are given by way of example in Table 1 (fig.1).

Bio-diesel is currently produced by transesterification of triglycerides with methanol, producing methyl-ester and glycerol. This transesterification is catalysed by homogeneous or heterogeneous basic catalyst. Typically homogeneous catalysts are alkali hydroxides or alkali alkoxides and typical heterogeneous catalysts are alkaline earth or zinc oxide materials, like zinc or magnesium-aluminate spinels. The presence of free fatty acids (FFA) in the raw triglycerides is a cumbersome for the production of bio-diesel as the FFAs react stoechiometrically with the basic catalyst producing alkali or alkaline soaps. This means that fats & oils that contain significant amounts of FFA's cannot be employed directly for bio-diesel production with this process. Several technical solutions have been proposed: (i) starting with an acid catalysed interesterification with additional glycerol to convert FFA's into glycerides prior to the basic transesterification; (ii) prior to the basic catalysed transesterification the FFA's are removed by steam and/or vacuum distillation. The latter solution results in a net loss of feedstock for the production of bio-diesel. Eventually, the so produced FFA's can be converted by acid catalysis into esters in a separate process unit. FFA's can be present in fats and oils in different concentrations and can be present as such resulting from the extraction process or can be produced during storage as

of the presence of trace amounts of lipase enzyme that catalyse the triglyceride hydrolysis or can be produced during processing, like thermal treatments during cooking.

There are other potential feedstocks available at this time, namely trap and sewage grease and other very high free fatty acid greases in which the FFA's can exceed 50wt%.

The main sources of fats & oils are palm and palm kernels, soybeans, rapeseed, sunflower, coconut, corn, animal fats, milk fats.

Potentially new sources of triglycerides will become available in the near future, namely those extracted from Jatropha and those produced by microalgues. These microalgues can accumulate more then 30 wt% of lipids on dry basis and they can either be cultivated in open basin, using atmospheric $CO_2$ or in closed photobioreactors. In the latter case, the required $CO_2$ can originate from the use of fossil hydrocarbons that are captured and injected into the photobioreactor. Main sources of fossil $CO_2$ are power stations, boilers used in refineries, fluided catalytic cracking (FCC) regenerators and steamcrackers furnaces used to bring hydrocarbon streams at high temperature or to supply heat of reactions in hydrocarbon transformations in refineries and steamcrackers. In particular steamcracking furnaces and the FCC regenerator produce a lot of $CO_2$.

US 2007/0175795 reports the contacting of a hydrocarbon and a triglyceride-containing compound to form a mixture and contacting the mixture with a hydrotreating catalyst in a fixed bed reactor under conditions sufficient to produce a reaction product containing diesel boiling range hydrocarbons. The example demonstrates that the hydrotreatment of such mixture increases the cloud point and pour point of the resulting hydrocarbon mixture.

US 2004/0230085 reports a process for producing a hydrocarbon component of biological origin, characterized in that the process comprises at least two steps, the first one of which is a deoxygenation step and the second one is an isomerisation step. A biological material containing fatty acids and/or fatty acid esters serves as the feedstock. The resulting products have low solidification points and high cetane number and can be used as diesel or as solvent.

US 2007/0135669 reports the manufacture of branched saturated hydrocarbons, characterized in that a feedstock comprising unsaturated fatty acids or fatty acids esters with C1-C5 alcohols, or mixture thereof, is subjected to a skeletal isomerisation step followed by a deoxygenation step. The results demonstrate that very good cloud points can be obtained.

US 2007/0039240 reports on a process for cracking tallow into diesel fuel comprising: thermally cracking the tallow in a cracking vessel at a temperature of 260-371°C, at ambient pressure and in the absence of a catalyst to yield in part cracked hydrocarbons.

US 4554397 reports on a process for manufacturing olefins, comprising contacting a carboxylic acid or a carboxylic ester with a catalyst at a temperature of 200-400°C, wherein the catalyst simultaneously contains nickel and at least one metal from the group consisting of tin, germanium and lead.

To be used in the above processes, as in many other processes, in particular for food uses, naturally occurring fats and oils have to be refined by well known chemical and physical processes. Crude oils and fats indeed contain phosphatides, waxes, pro-oxidants and other impurities that might lead to deposits of so-called gums on storage and transport. These gums are formed by hydratation of some of the phosphatides contained in the oils/fats.

Chemical refining for food-grade applications comprises a degumming step, a neutralisation step with an alkaline solution (usually NaOH) to remove the FFA's and the resulting soaps can be used as such or the soaps can be split to use the pure FFA's, a bleaching step and deodorisation. FFA's, most of the phosphatides, and other impurities are removed during chemical refining.

Physical refining comprises a degumming step, a bleaching step and a steam refining deodorisation step. Here, the phosphatides and other impurities are removed in the degumming step while FFA's are removed by distillation during deodorization step.

However, these well known processes consume chemicals, generate waste and may consume a lot of energy, in particular when heating is required. Moreover, if such a refining is necessary for food use, it may not be useful for other purposes, such as fuel production. Finally, these refining methods eliminate FFA's which may reduce the amount of fuel production. It is however necessary to remove phosphatides as well as metals from natural occurring oils and fats to use them in a fuel production process as these processes use solid catalysts and typically higher operating temperatures. Hence, all impurities that might result in solid catalyst deterioration or fouling of equipment due to deposition of certain impurities have to be removed. Due to the complexity of the oils, elimination of all gum products can be difficult. In particular the remaining amount of phosphatides and metals in the refined oils and fats in order to protect properly the catalytic deoxygenation process is generally more severe than for food applications. Moreover, as for food applications rarely mixtures of oils of different origins are simultaneously processed, for fuel applications most of the time mixtures of oils and fats of different origins are used and their relative ratios over time might fluctuate a lot. So there is a need for a flexible and robust process to properly remove phosphatides and metals from complex mixtures of oils and fats of different origin and of fluctuating composition.

Potential gum content formation may vary widely due to wide variation of phosphatides contents of crude fats & oils. Typical contents of phosphatides and phosphorus are given in table 2 extracted from conference paper: Andrew

Logan, Degumming, Refining and Water Washing of Oils in Lipids: From Fundamentals to the Future, Abu Dhabi, 15-16 April 2008.

Table 2

| Oil type | Phosphatides (wt%) | Phosphorus (wtppm) |
|---|---|---|
| **Coconut** | 0.02 - 0.05 | 10 - 20 |
| **Corn** | 0.7 - 2.0 | 250 - 800 |
| **Cottonseed** | 1.0 - 2.5 | 400 - 1000 |
| **Groundnut** | 0.3 - 0 .7 | 100 - 300 |
| **Palm** | 0.03 - 0.1 | 15 - 30 |
| **Rapeseed** | 0.5 - 3.5 | 200 - 1400 |
| **Soya** | 1.0 - 3.0 | 400 - 1200 |
| **Sunflower** | 0.5 - 1.3 | 200 - 500 |

The chemical structures of most common phosphatides are provided below: phosphatidic acid (or PA), phosphatidylethanolamine (or PE), phosphatidylcholine (or PC) and phosphatidylinositol (or PI).

Phosphatidylethanolamine (PE) :

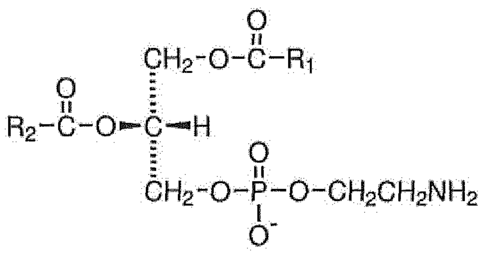

$R_1$, $R_2$ = fatty acid residues

phosphatidylcholine (PC) :

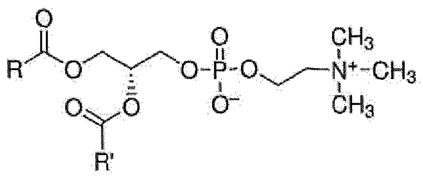

R, R' = fatty acid residues

phosphatidic acid (PA) :

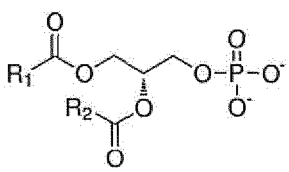

$R_1$,$R_2$ = fatty acid residues

Phosphatidylinositol (PI) :

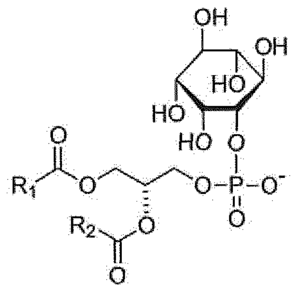

$R_1$,$R_2$=fatty acid residues

As these compounds are often charged because of the low (phosphate group) or high pKa (amino group) they can also contain alkali or alkaline earth elements or can take up metal cations as copper or iron (Albert J. Dijkstra, About water degumming and the hydration of non-hydratable Phosphatides, Eur. J. Lipid Sci. Technol. 2017, 119, 1600496).

Four major well known degumming processes are most commonly used and described thereafter.

One of them is water degumming which consists in mixing oil with water. The degree to which a phosphatide can be removed during water degumming depends on its hydrophilicity and hence is strongly influenced by the pH of the water used during degumming (see below table 3).

Table 3

| pH | PC | PE | PI | PA | Ca-PA |
|---|---|---|---|---|---|
| **2** | + | + | 0 | 0 | 0 |
| **3** | (+) | (+) | 0 | 0 | 0 |
| **4** | (±) | (±) | (-) | (-) | 0 |
| **5-7** | ± | + | - | - | 0 |
| **8-9** | ± | ± | - | (2-) | 0 |
| **>10** | ± | - | - | 2- | 0 |

Explanation: numbers between parentheses indicate a transition between the value at lower pH and the value at higher pH.

• (+) About half the moieties have a positive charge
• ± Nearly all moieties are Zwitterions
• (±) About half the moieties are Zwitterions
• 0 Hardly any moieties carry a charge
• (-) About half the moieties carry a negative charge
• - Nearly all moieties carry a single negative charge
• 2- Nearly all moieties carry a double negative charge

Phosphatidylinositol (PI), having five free hydroxyl groups on the inositol moiety makes PI strongly hydrophilic and will be hydrated during the water degumming treatment and the PI content of properly water-degummed oil is negligible. Similarly, the positive charge of the trimethylamino group in phosphatidylcholine (PC) makes this phosphatide hydrophilic. This hydrophilicity does not depend on the pH of the water used to degum the oil since even at pH > 5, when the phosphate group in the PC is dissociated and therefore carries a negative charge, it does not form an internal salt with the quaternary amino group for steric reasons. Consequently, the positive quaternary amino group remains isolated at all pH values and causes PC to be hydrophilic at all pH values. Almost all phosphatidylethanolamine (PE) molecules have a positive charge at pH = 2 and hence hydrophilic and hydratable. When the pH is increased, more and more phosphate groups dissociate and so a zwitterion is formed in which the positive amino group forms an internal salt with the negative phosphate group and hence loses hydrophilicity and hydration of PE is incomplete (water-degummed oil still contains some PE).

In case of phosphatidic acid (PA), in an acid environment, the hydroxyl groups of its phosphate moiety will not dissociate since the pKa value of the first hydroxyl group equals 2.7-3.8. Consequently, PA will be poorly hydratable

and remain in the oil when in contact with acid water. Raising the pH of this water to 5, dissociates most of the PA so that the molecule has a negative charge giving it a hydrophilicity that makes it hydratable.

The calcium salt of PA remain uncharged at all pH values because the divalent calcium forms a salt with the two dissociated hydroxyl groups of the phosphate moiety and hence alkaline earth salts of PA remain in the oil when it is degummed with water and constitute the nonhydratable phosphatides (NHP).

Beside these thermodynamic considerations, ruled by chemical properties like pKa, the degumming process is also a kinetically controlled process, meaning that thermodynamic equilibrium is not always reached because of diffusion limitations of the phosphatides through the oil phase to the water interface but also because of the occurrence (concentration) of reacting species at the interface of oil-water. It is believed that for water degumming the dispersion is less essential but for reactive degumming where acids, complexing agents (like EDTA) or enzymes are used the dispersion of the aqueous phase in the oil phase is very important.

The main purposes of the water degumming process are to produce oil that does not deposit a residue during transportation and storage, and to control the phosphorus content of crude oils just below 200 wppm (typically 50-200 wppm). Only hydratable phosphatides are removed with this process. The nonhydratable phosphatides, which are calcium and magnesium salts of phosphatic acid and phosphatidyl ethanolamine, remain in the oil after water degumming.

In water degumming the oil is typically heated to 60-70 °C, water added and mixed about 30 minutes followed by centrifugal separation of hydrated gums and vacuum drying of degummed oil. This process involves the addition of live steam to raw oil for a short period. The proper amount of water is normally about 75wt% of the phosphatides content of the oil. Too little water produces dark viscous gums and hazy oil, while too much water causes excess oil losses through hydrolysis. Water-degummed oil usually still contains phosphatides (between 50 and 200 wppm).

Acid degumming process is another major degumming process. It leads to lower residual phosphorus content (typically 20-50 wppm) than water degumming. The acid degumming process might be considered as a variant of the water degumming process in that it uses a combination of water and acid. The non-hydratable phosphatides can be conditioned into hydratable forms with acid degumming although the action of the degumming acid does not lead to full hydration of the phosphatides. Phosphoric and citric acids are used because they are sufficiently strong and they bind divalent metal ions. Several acid degumming processes have been developed to attain a phosphorus value lower than 5 wppm that is required for good quality physically refined oils. In acid degumming the oil is heated to 60-70 °C, acid added and mixed about 30 minutes.

Dry degumming process is another major degumming process in which the oil is treated with an acid (principle is that strong acids displace weaker acids from their salts) to decompose the metal ion/phosphatides complex and is then mixed with bleaching earth. The earth containing the degumming acid, phosphatides, pigments and other impurities is then removed by filtration. This process constitutes the main treatment for palm oil, lauric oils, canola oil and low phosphatides animal fats, such as tallow or lard.

The last major degumming process is enzymatic degumming process, in which an enzyme, for example Phospholipase Al, the latest developed degumming enzyme, changes the phospholipids into lysophospholipids and free fatty acids. This process has three important steps:

(1) adjustment of the pH with a buffer;
(2) enzymatic reaction in the holding tanks; and
(3) separation of the sludge from the oil.

Oil to be degummed enzymatically by this way can be crude or water degummed.

The lipid handbook (The lipid handbook, edited by Frank D. Gunstone, John L. Harwood, Albert J. Dijkstra. 3rd ed.) describes many variants and details of the degumming processes.

All these degumming processes may not allow sufficient removal of some compounds such as phosphatides, metals to allow a direct use in a hydroprocessing process.

There is therefore a need for an efficient degumming process allowing production of refined oil suitable for fuel production. Moreover, there is a need for a flexible and robust process to properly remove phosphatides and metals from complex mixtures of oils and fats of different origin and of fluctuating composition.

Moreover, peroxides are produced by the action of oxygen, ozone, $H_2O_2$ or other inorganic or organic peroxides on unsaturations of fatty acid chains or esters. Such peroxides are also responsible for the formation of gum as well as phosphatides. These peroxides can pass through the conventional degumming treatments and end up in the hydroprocessing unit.

There is therefore also a need for a refining process allowing a reduction or limitation of the quantity of peroxides in the oil submitted to hydroprocessing.

It has been discovered a process to make bio-products, such as bio-LPG, bio-naphtha, bio-jet and bio-diesel, in an integrated biorefinery from all kinds of natural mixtures of fatty acid esters and/or free fatty acids by applying hydrodynamic cavitation in order to protect the deoxygenation solid catalyst. In said process fats & oils are refined to

remove impurities contained in the mixtures of fatty acid esters and/or free fatty acids, in particular phosphorus, nitrogen, alkali or alkaline earth elements, halogens such as chlorine, and metals, these elements being either in the form of elements or contained in compounds.

As several sources of fats & oils are not suitable to be converted in ester-type bio-diesel because they contain too much saturated acyl-moieties that result in high pour-points and hence improper cold-flow properties, while others are too unsaturated resulting in unstable products, the present invention solves this problem by an appropriate purification of the starting complex mixture followed by a deoxygenation over a solid catalyst that results in essentially only paraffinic hydrocarbons. Such paraffins can subsequently be hydrocracked/hydroisomerised in order to improve the cold-flow properties by introducing alkyl-branches. This hydroisomerisation goes together with some cracking making naphtha, jet fuel and LPG range paraffins.

Deoxygenation is referred to as hydrodeoxygenation, hydrodecarboxylation or hydrodecarbonylation. From a mechanistic point of view, decarboxylation and decarbonylation do not require dihydrogen, however as the feedstock can contain double bonds in the acyl-chain or the product of decarbonylation is an olefins, dihydrogen will be consumed in the hydrogenation of the double bonds. Therefore hydrodecarboxylation and decarboxylation mean the same and hydrodecarbonylation and decarbonylation mean the same.

LPG is liquefied petroleum gas and consists essentially of propane and butanes with some corresponding olefins. Naphtha are typically C5 to C10 range hydrocarbons in the boiling range of 30-200°C. Jet fuel, aviation fuel or kerosene are typically C6 to C15 hydrocarbons in the boiling range of 150-275°C. Diesel are typically C8 and C22 hydrocarbons in the boiling range of 200-350°C. Gasoline has similar hydrocarbon number as naphtha although it might contain some lighter components like butanes and some heavier hydrocarbons up to C12 as well, but the essential difference is that it has to reach a high enough octane number in combustion engine applications.

The obtained bioparaffins can be blended with diesel, gasoline, jet fuel or LPG or can be used as pure commercial bio-products. According to the present invention, such a problem can be solved by hydrodeoxygenating/decarboxylating (or decarbonylating) this biofeed before its use as bio-LPG, bio-naphtha, bio-jet or bio-diesel. Thanks to this hydrodeoxygenation/ decarboxylation (or decarbonylation), the negative effect due to the highly unsaturated acyl-moieties and the high oxygen content is reduced.

The use of a biofeed is a possible solution in the search of alternative material for the naphtha-cracker. Nevertheless, using this type of feed can lead to corrosion problems and excessive fouling because of oxygenates forming from the oxygen atoms in the biofeed. Also existing steamcrackers are not designed to remove high amounts of carboxides that would result from the steamcracking of these biofeedstock. According to the present invention, such a problem can be solved by hydrodeoxygenating/ decarboxylating (or decarbonylating) this biofeed before its injection into the steam cracker. Thanks to this hydrodeoxygenation/decarboxylation (or decarbonylation), the negative effect due to the production of CO and $CO_2$ and traces of low molecular weight oxygenates (aldehydes and acids) in the steam cracker is reduced.

US 2009/314688 and US 2015/210949 both disclose processes for the production of bio-chemicals.

[Brief description of the invention]

The subject-matter of the present invention is a process as defined in the appended claims.

In particular, by applying hydrodynamic cavitation to the natural occurring oil(s), the invention allows removing essentially most of the impurities contained in the oil, in particular non-oil soluble components.

Impurities may include chemical elements that are detrimental to preheating equipment and solid catalysts, in particular deoxygenation catalysts, or compounds containing such chemical elements.

Examples of chemical elements detrimental to deoxygenation catalysts include phosphorous, silicon, alkali elements, alkaline earth elements, metals.

In particular, impurities removed may include phosphatides and metal-containing components to protect hydrodeoxygenation, decarboxylaton or decarbonylation process using solid catalysts.

Advantageously, the hydrodynamic cavitation process may allow extracting hydratable and non-hydratable phosphatides, into the aqueous phase and hence producing separable gums.

Impurities to remove may also include nitrogen and chlorine, in form of chemical elemental or in the form of inorganic or organic compounds.

Impurities to remove may also include peroxides.

By "substantially linear paraffins", we mean a composition of paraffins consisting of at least 90% by weight of linear paraffins.

Said natural occurring oil(s) may contain one or several oils chosen among vegetable oil, animal fat, preferentially inedible highly saturated oils, waste oils, by-products of the refining of vegetable oil(s) or of animal oil(s) containing free fatty acids, tall oils, and oil produced by bacteria, yeast, algae, prokaryotes or eukaryotes.

In the description "natural occurring oil(s)" designates indifferently oil, fat and their mixtures.

Specific examples of these fats & oils have been previously mentioned in the present specification.

The process may provide the addition of at least one degumming agent to the natural occurring oil(s) in the hydrodynamic cavitation processing step.

The degumming agent can be chosen among water, steam, acids and complexing agents.

The pre-treatment performed at step b) can be chosen among a bleaching process in which the refined oil is contacted with an absorbent, a process in which the refined oil is contacted with an ion-exchange resin, a mild acid wash of the refined oil, a process using guard-beds, filtration, solvent extraction.

Said at least one catalyst of the hydroprocessing step can be chosen among a hydrodeoxygenation catalyst, a decarbonylation catalyst and a decarboxylation catalyst. Such catalyst may be designated as a deoxygenation catalyst.

In one embodiment, said refined oil can be transformed into linear or substantially linear paraffin's together with bio-propane by hydrodeoxygenation, decarboxylation or decarbonylation in the presence of dihydrogen.

The hydroprocessing can be carried out at 100 to 550°C in presence of dihydrogen at pressures ranging from 0.01 up to 10 MPa. The dihydrogen to feedstock ratio is from 100 to 2000 Nl/l.

In one embodiment, the process can further comprise:

hydrolysing the refined oil or pre-treated oil to transform fatty acid esters contained into the refined oil or pre-treated oil into alcohols and free fatty acids,
sending to the hydroprocessing step, in particular directly, the free fatty acids after alcohols removal.

In other words, said refined oil can also be transformed into linear or substantially linear paraffin's by producing free fatty acids by hydrolysis of the refined fats & oils into glycerol and free fatty acids, removal of the glycerol and subsequently hydrodeoxygenation or decarboxylation (or decarbonylation) of the free fatty acids, said hydroprocessing being conducted in the presence of dihydrogen and of at least one hydrodeoxygenation, decarbonylation catalyst or decarboxylation catalyst.

The paraffins obtained in the present process are essentially linear in nature after the hydrodeoxygenation or decarboxylation step.

Optionally a hydrocracking step can be added after the hydrodeoxygenation or decarboxylation step. This hydrocracking step introduces alkyl-branches in the hydrocarbon chain and shortens also to a certain extent the length of the hydrocarbon resulting in jet fuel, naphtha and LPG range hydrocarbons.

Thus, in one embodiment, the process may comprise:
(d) submitting at least a part of the linear or substantially linear paraffins from step c) to a hydrocracking - hydroisomerisation reaction in presence of dihydrogen and of at least one catalyst to obtain an effluent and fractionating said effluent into dihydrogen, LPG, naphtha, Jet fuel and diesel fractions.

In one embodiment, the process may comprise:
(e) submitting at least a part of the linear or substantially linear paraffins from step c) to a steamcracking reaction.

[Detailed description of the invention]

<u>NATURAL OCCURRING OIL(S) TREATED</u>

The feedstock used in the process of the invention consists of natural occurring oil(s), in particular of a mixture of natural occurring oils.

A natural occurring oil is defined as an oil of biomass origin, and do not contain or consist of any mineral oil.

The natural occurring oil(s) can be selected among vegetable oils, animal fats, preferentially inedible highly saturated oils, waste oils, by-products of the refining of vegetable oil(s) or of animal oil(s) containing free fatty acids, tall oils,, oils produced by bacteria, yeast, algae, prokaryotes or eukaryotes, and mixtures thereof.

In one embodiment, such natural occurring oil(s) may contain 50w% or more of fatty acid esters and/or free fatty acids, preferably 60wt% or more, most preferably 70wt% or more.

In one embodiment, such natural occurring oil(s) may contain fatty acids esters and free fatty acids, containing one to three saturated or unsaturated ($C_{10}$-$C_{24}$) acyl-groups. When several acyl groups are present, they may be the same or different.

Suitable vegetable oils are for example palm oil, palm kernels oil, soy oils, soybean oil, rapeseed (colza or canola) oil, sunflower oil, linseed oil, rice bran oil, maize (corn) oil, olive oil, castor oil, sesame oil, pine oil, peanut oil, castor oil, mustard oil, carinata oil, palm kernel oil, hempseed oil, coconut oil, babasu oil, cottonseed oil, linola oil, jatropha oil.

Animal fats include tallow, lard, grease (yellow and brown grease), fish oil/fat, butterfat, milk fats.

The vegetable/ animal oils (or fats) can be used crude, without any treatment after their recovery by any of the usual well known extraction methods, including chemical extraction (such as solvent extraction), supercritical fluid extraction, steam distillation and mechanical extraction (such as crushing).

By-products of the refining of vegetable oils or animal oils are by-products containing free fatty acids that are removed from the crude fats and oils by neutralisation or vacuum or steam distillation. Typical example is PFAD (palm free acid distillate).

Waste oils include waste cooking oils (waste food oil) and oils recovered from residual water, such as trap and drain greases/oils, gutter oils, sewage oils, for example from water purification plants.

Tall oils, including crude tall oils, distillate tall oils (DTO) and tall oil fatty acids (TOFA), preferably DTO and TOFA, can also be used in the present invention.

Tall oil, or otherwise known as tallol, is a liquid by-product of the Kraft process for processing wood, for isolating on the one hand the wood pulp useful in the papermaking industry, and on the other hand tall oil. Tall oil is essentially obtained when conifers are used in the Kraft process. After treating wood chips with sodium sulfide in aqueous solution, the tall oil isolated is alkaline. The latter is then acidified with sulfuric acid to produce crude tall oil.

Crude tall oil mainly comprises rosins (which contains resin acids, mainly cyclic abietic acid isomers), fatty acids (mainly palmitic acid, oleic acid and linoleic acid) fatty alcohols, unsaponifiable compounds in particular unsaponifiable sterols (5-10wt%), sterols, and other hydrocarbons.

Insufficient acidification can lead to a crude tall oil containing metal salts, generally of sodium.

By fractional distillation of crude tall oil, tall oil fatty acids (TOFA) and distilled tall oil (DTO) can be recovered. DTO contains a mixture of fatty acids and resin acids and is a fraction heavier than TOFA fraction but lighter than tall oil pitch, which is the residue of the crude oil distillation. TOFA fraction consists mostly of C18 fatty acids. TOFA fraction may need to be purified to contain a rosin content to 1-10wt%.

The natural occurring oil(s) used in the present invention also include oils produced by microorganisms, either natural or genetically modified microorganisms, such as bacteria, yeast, algae, prokaryotes or eukaryotes. In particular such oils can be recovered by mechanical or chemical extraction well known methods.

The above oils contain variable amounts of nontriglyceride components such as free fatty acids, mono and diglycerides, and many other organic and inorganic components including phosphatides, sterols, tocopherols, tocotrienols hydrocarbons, pigments (gossypol, chlorophyll), vitamins (carotenoids), sterols glucosides, glycolipids, protein fragments, traces of pesticides and traces metals, as well as resinous and mucilaginous materials.

Removal of some of these components, in particular compounds/chemical elements, which interfere with further processing and cause the oil to precipitate, fouling in preheating equipment and catalyst beds, and the poisoning deoxygenation catalysts, is the objective of the refining step (a).

For the hydroprocessing of the present invention, essentially the phosphorous, alkali, alkaline earth, silicon and other metals, as well as peroxides, that might deteriorate the hydroprocessing step have to be removed. The deterioration might occur in the preheating section where the feedstock is brought to the reaction temperature where fouling of equipment can occur and hence require periodic cleaning. Deterioration might also occur where the active phase of the catalyst might lose catalytic activity or where pore plugging might occur by deposition of certain metals or metal oxides or organic metal compounds.

## REFINING PRETREATMENT

The refining step (a) of the present invention includes a hydrodynamic cavitation processing in presence of water to remove impurities, in particular phosphorous, alkali, alkaline earth, silicon and other metals, as well as peroxides, that might deteriorate the hydroprocessing step, from the oil to treat. A refined oil is obtained at the end of the refining (a).

The hydrodynamic cavitational processing allows transferring impurities present in the oil to a water phase which is thereafter separated from the oil by commonly available separation methods.

In a preferred embodiment, the hydrodynamic cavitational processing is performed on the raw fats/oils, without previous pre-treatment (on crude oils).

It may also be envisaged to submit the raw crude fats/oils to a water degumming to remove the hydratable phosphatides and other metal-containing compounds, and then to submit the resulting oil to the hydrodynamic cavitation processing so as to remove efficiently the non-hydratable phosphatides and some remaining metal-containing compounds.

It may further be envisaged that two hydrodynamic cavitation processing steps are used: the first one with only water addition to remove essentially the hydratable phosphatides and other metal-containing compounds, followed by a hydrodynamic cavitation where a degumming agent are supplemented to the water to remove efficiently the nonhydratable phosphatides and some remaining metal-containing compounds.

### Hydrodynamic cavitation processing

Cavitation is the phenomenon of formation of vapor bubbles into a flowing liquid in regions where pressure of

liquid falls below its vapor pressure at the considered temperature.

Cavitation is a phenomenon of nucleation, growth and implosion (collapse) of vapor or gas filled cavities, which can be achieved by the passage of ultrasound (acoustic cavitation), by a laser, by injecting steam into a cold fluid or by alterations in the flow and pressure (hydrodynamic cavitation).

In the case of hydrodynamic cavitation, flow geometry is altered in such a way that the kinetic energy is increased by having a flow constriction which results into a considerable reduction in the local pressure of the liquid with a corresponding increase in the kinetic energy. When the pressure of the liquid falls below the vapor pressure of the same liquid, millions of vapor cavities are created, which are subjected to turbulent conditions of varying pressure fields downstream of the constriction. Life time of these cavities is very small (few micro seconds). The cavities finally collapse implosively and result in generation of very high pressures (up to 100MPa) and temperatures (10,000 K), as well as intense shearing forces. The energy released upon implosion and/or pulsation of cavitation bubbles thus alters the property of the fluids and intensifies transport phenomenon and some chemical transformation.

It is well known that hydrodynamic cavitation occurs in all hydraulic systems in which considerable pressure differences occur, such as turbines, pumps and high-pressure nozzles.

The hydrodynamic cavitation processing of the present invention is performed under conditions efficient to generate cavitation features, in other words the formation and collapse of cavitation bubbles, which enhance the transfer of impurities (hydratable phosphatides and metal-containing compounds) contained in the oil into a water phase and which enhances the kinetics of certain reactions that transform non-hydratable phosphatides into hydratable phosphatides.

Those conditions depend on the properties of the fluid flow, the design of the cavitational device, the flow velocity, for example sustained by a pump, the temperature of the fluid flow and can be easily determined by the person skilled in the art. The cavitation phenomenon is categorized by the dimensionless cavitation number $C_v$, which is defined as:

$$C_v = (P-P_v)/0.5\rho V^2,$$

where:

P [Pa] is the static pressure downstream of a restriction orifice,
$P_v$ [Pa] is the vapor pressure of fluid,
V [m/s] is an average velocity of fluid through the orifice, and
p [kg/m3] is the density of the fluid.

The cavitation number at which cavitation begins is the cavitation inception number, $C_{vi}$. Cavitation ideally begins at $C_{vi}$=1, and a Cv<1 indicates a higher degree of cavitation. Cavitation may start at higher $C_{vi}$ when gases are dissolved in the liquid, characterized by its $P_v$. The quantity of cavitation events in a unit of flow is another parameter that can be considered. The effect of surface tension and size of cavities on the hydrostatic pressure is defined as follows: $P_i=P_0+2a/R$, where Pi is the hydrostatic pressure, a is the surface tension, and R is the radius of the bubble. The smaller the bubble, the greater the energy released during its implosion.

The cavitation processing is performed in presence of water.

The water amount should be enough to remove at least phosphatides and some metal-containing compounds. A proper amount of water is normally about 75wt% of the phosphatides content of the oil.

In one embodiment, the water content is 0.5-10wt% (weight water over weight water and oil), preferably 1-5wt% and most preferably 2-4wt% or in any range obtained from combination of the previous ranges.

The oil to treat may therefore be mixed with water prior to the cavitation processing if its water content is not sufficient.

The cavitation processing is maintained for a period of time sufficient to obtain the refined product.

Such hydrodynamic cavitation can be generated by passing the mixture to treat through one or several cavitation devices.

The hydrodynamic cavitation process may therefore include:

pumping the oil to treat through a cavitation device,
generating cavitation features to remove impurities.

Appropriate cavitation devices that can be used are for example disclosed in WO201098783A1, US8911808B2, US7762715B2, US8042989B2.

For example, a suitable cavitation device includes a flow-path through which the fluid is pumped, such as the

one disclosed in US8911808B2, wherein a predetermined pump pressure is applied preferentially in the range of 340 kPa-34 MPA.

The cavitation temporarily separates the highboiling oil constituents from the entrapped gases, water vapor and the vapors of the volatile impurities that can be found within the bubbles. The pulsation and/or implosion of these bubbles mixes the oil and water, greatly increasing the surface contact area of these unmixable liquids and enhancing the transfer of impurities to the water phase.

In the present case, using hydrodynamic cavitation processing allows modifying the hydratable and non-hydratable phosphatides and metals contained in the oil and transferring these impurities into an aqueous phase which can then be separated.

Without wishing to be bound by any theory, cavitation would also decompose peroxides to lead to products not yet identified, probably alcohols, diols and / or ketones, by mechanisms of reduction / rearrangement / hydration of the peroxides/ accelerated oxidation by the peroxides of other carbons, therefore reducing the amount of peroxides in the refined oil and the risk of non-oil soluble gum forming in the subsequent intermediate storage, in subsequent preheating of the refined oil to the reaction temperature or in subsequent hydrodeoxygenation step.

In the hydrodynamic cavitation processing, the phosphatides are hydrated to gums, which are insoluble in oil and can be readily separated as a sludge forming a water phase, for example by settling, filtering or centrifugal action.

The refining step of the present invention is therefore a degumming process.

As such, the refining can be improved by mixing the oil to treat with at least one degumming agent.

In an embodiment, the degumming agent can be chosen among water, steam, acids, complexing agents and their mixtures.

Acids are for example strong acids, in particular inorganic acids, such as phosphoric acid, sulphuric acid.

Complexing agents are for example weak organic acids (or their corresponding anhydrides) such as acetic acid, citric acid, oxalic acid, tartaric acid, malic acid, maleic acid, fumaric acid, aspartic amino acid, ethylenediaminetetraacetic acid (EDTA).

Preferably, the degumming agent comprises water, steam, phosphoric acid, acetic acid, citric acid, oxalic acid, tartaric acid, malic acid, fumaric acid, aspartic amino acid, ethylenediaminetetraacetic acid, alkali, salts, chelating agents, crown ethers, or maleic anhydride.

In an embodiment, the oil to treat may be mixed with water or a solution containing degumming agent(s).

In an embodiment, the oil to treat may be mixed with mineral-free water, distilled, de-ionized, soft water or similar type of water with no chemical agents added so as to improve the environmental impact, by reducing hazardous waste accumulation.

Water may be used alone without addition of other degumming agent. The treatment is then similar to the known water degumming treatment.

The addition of the degumming agent and or water can be performed before the cavitation processing (optional mixing step) or during the cavitation processing.

The oil to treat may also be mixed with a solvent such as hexane to improve flux or small amounts of soluble gases might be added in order to improve cavitation inception. Suitable gases are dihydrogen, dinitrogen, carbon dioxide, steam or mixtures thereof.

The oil to treat may also be mixed with a light hydrocarbons fraction or a gas stream to improve cavitation. Addition of such light hydrocarbons fraction /gas stream may further reduce viscosity of the feed treated in the hydrodynamic cavitational processing step and therefore reduce the pressure loss over the device, which may lower the vapor pressure, improve the creation of bubbles and therefore the cavitation.

In an embodiment, a light fraction comprising C4-C15 hydrocarbons, preferably C5-C10 hydrocarbons, may then be added to the natural occurring oil(s) in the hydrodynamic cavitational processing, for example prior to this step. Such light fraction comprises mainly, for example more than 90%wt or more than 95%wt, C4-C15 or C5-C10 hydrocarbons.

Such light fraction is for example a naphtha fraction, in particular a C5-C10 naphtha fraction, for example chosen among a naphtha fraction of mineral origin issued from the treatment of mineral oil, a naphtha fraction recovered from the fractionation of the effluent from the hydrocracking - hydroisomerisation step (d) of the invention, or their mixture. Additional water, acids and/or complexing agents can be added to the light hydrocarbon fraction.

In an embodiment, a gas stream may be added to the natural occurring oil(s) in the hydrodynamic cavitational processing, for example prior to this step. The gas stream may comprise, or consist of, dihydrogen, carbon dioxide, dihydrogen sulfide, methane, ethane, propane or mixtures thereof.

Advantageously, the light fraction or the gas stream may represent from 0.1 to 10wt% of the feed treated in the hydrodynamic cavitational processing step.

The pumping and cavitation generating steps may be repeated prior to performing the separating step (either by recycling of the outlet of the cavitation device before separation or by using multiple cavitation devices in series).

Alternatively, the pumping, cavitation generating and separating steps may be repeated using the separated

oil phase (by recycling of partially refined oil after separation or by using multiple units in series, each unit including a cavitation device and a separation device).

Since hydrodynamic cavitation-assisted degumming provides vigorous mixing, it usually requires substantially smaller amounts of degumming agents than conventional methods. In addition, hydrodynamic cavitation-assisted degumming can be scaled up easily to accommodate large throughputs.

Multiple cavitation devices can be put in series in order to maximize the degumming result and multiple cavitation devices can be put in parallel or combinations thereof. Optionally the parallel multiple cavitation devices can be fed with one or several pumps.

Often, cavitation-assisted degumming does not require extensive preheating of crude vegetable oil or water and, therefore, can be conducted at temperatures close to ambient or temperatures below the ambient, for example at 15-25°C. This protects unsaturated fatty acids from oxidation and deterioration and saves energy and feedstock.

However, the hydrodynamic cavitation can be carried out from 10 to 90°C, preferably from 25 to 75°C and more preferably from 30 to 60°C.

Separation step

The water (aqueous) phase can be separated by one or several of the following well known techniques : sedimentation, centrifugation, filtration, distillation, extraction or washing, preferably sedimentation, centrifugation, filtration. The product recovered after separation of the aqueous water is an oily phase which constitutes the refined oil.

This separation step also allows removing of gum potentially formed or present.

Optionally, after the hydrodynamic cavitation processing and before the separation step, some neutralization agent might be added in order to mitigate corrosion issues or emulsification issues.

Optionally, after a first separation step, the obtained refined oil can be washed with water, followed by a separation of the wash water and eventually drying of the refined oil.

OPTIONAL PRE-TREATMENT OF THE REFINED OIL

In the present invention, the refined oil may still contain contaminants such as trace metals (alkali metals such as sodium and potassium), phosphorous (residual phosphatides), as well as solids, eventual oxidative degradation products, water and soaps.

This optional step can be performed in particular to further remove these impurities.

In an embodiment, this pre-treatment is a bleaching process.

Bleaching is a well known technique usually performed to decolour and purify chemically or physically refined oil. It usually ensures the removal of soaps, residual phosphatides, trace metals, and some oxidation products, and it catalyses the removal of carotene and the adsorbent also catalyses the decomposition of peroxides. Another function is the removal of the peroxides and secondary oxidation products.

Such process consists in contacting the refined oil with an absorbent, such as adsorptive clays, synthetic amorphous silica and activated carbons.

The key parameters for the bleaching process are procedure, adsorbent type and dosage, temperature, time, moisture and filtration, as shown in the Lipid Handbook (The lipid handbook, edited by Frank D. Gunstone, John L. Harwood, Albert J. Dijkstra. 3rd ed., chapter 3.7).

Another possible pre-treatment is an ion-exchange resin treatment. Such treatment involves contacting the refined oil with an ion-exchange resin in a pretreatment zone at pre-treatment conditions. The ion-exchange resin is for example an acidic ion exchange resin such as Amberlyst™-15 and can be used as a bed in a reactor through which the feedstock is flowed, either upflow or downflow.

Another possible pre-treatment is a mild acid wash. Such treatment is carried out by contacting the refined oil with an acid such as Sulfuric, nitric, phosphoric, or hydrochloric in a reactor. The acid and refined oil can be contacted either in a batch or continuous process. Contacting is done with a dilute acid solution usually at ambient temperature and atmospheric pressure. If the contacting is done in a continuous manner, it is usually done in a counter current manner.

Yet another possible pre-treatment is the use of guard beds which are well known in the art. These can include alumina-containing guard beds either with or without demetallization catalysts such as nickel, cobalt and/or molybdenum.

Filtration and solvent extraction techniques are other choices which may be employed.

In a preferred embodiment, a bleaching process is used.

OPTIONAL HYDROLYSIS OF THE REFINED OIL

The refined oil or pre-treated oil previously obtained can further be submitted, in particular directly, to a hydrolysing step to recover free fatty acids which will be thereafter treated in the hydroprocessing step.

The hydrolysis of fatty acid esters, mainly triglycerides, produces free fatty acids and alcohols (mono- or polyols), in particular glycerol.

The hydrolysis (also named splitting) can be carried out in presence of steam, either thermally at 15 to 75 bars and at 50 - 300 °C or catalytically, for example with basic catalysts, like MgO, CaO, ZnO, spinels (Mg2Al204, ZnAl204), perovskites (BaTiO3, ZnTiO3), calciumsilicates (like xonotlite) or basic alumina or with acidic catalysts, like sulphuric acid.

Detailed information about fat & oil splitting has been published by Sonntag (Sonntag, N., J. Am. Oil. Chem. Soc., 56, p. 729, 1979 and Bailey's Industrial Oil and Fat Products, ed. F. Shahidi, 2005, John Wiley & Sons). In the Colgate-Emery process, heated liquid lipid is introduced at the bottom of a vertical tubular reactor. Heated water enters at the top. As the fats & oils rise through the descending water under pressure, a continuous zone of high water solubility in oil establishes, wherein hydrolysis occurs. Effluent from the column is recovered, fatty acids from one outlet and an aqueous glycerol stream from the other. The presence of small amounts of mineral acids, such as sulfuric acid or sulfonic acids or certain metal oxides, such as zinc or magnesium oxide, accelerates the splitting reaction. These metal oxides are true catalysts and they assist also in the formation of emulsions.

The free fatty acids produced by the hydrolysis are sent, in particular directly, to the hydroprocessing step after removal of alcohols (mono- or polyols) produced. Such removal can be performed by any appropriate known separation technique.

OBTENTION OF BIO-PARAFFINS FROM REFINED OIL

Bio-paraffins are obtained by hydroprocessing of the refined oil (or of the pre-treated oil) in presence of dihydrogen and of at least one catalyst. The conversion is performed by hydrodeoxygenation, decarboxylation or decarbonylation.

The bio-paraffins obtained are linear or substantially linear paraffins.

This step is preferably performed on the refined oil or pre-treated oil, in particular directly.

In one embodiment, refined oil or pre-treated oil can be mixed with mineral oil(s). The mineral oil(s) can be of the naphtha type, kerosene type or of the gasoil type. This mineral oil can be added in amounts from 1 to 85 wt%. This mineral oil, which contains generally organic sulphur compounds, will bring the required sulphur to maintain the catalytic activity of the cobalt, nickel, tungsten and molybdenum containing catalyst. At the same time the mineral oil is at least partially desulphurised as well.

Two options exist to convert the refined oil or pre-treated oil into paraffins suitable for production of LPG, naphtha, jet or diesel-like hydrocarbons that can be used for transportation fuels or as feedstock for steamcracking in order to produce light olefins, dienes and aromatics. These are summarised in table 4.

Table 4

| Process | Catalyst / intermediate compounds |
|---|---|
| Catalytic Hydrodeoxygenation | Supported Ni, Mo, W, Co, NiW, NiMo, CoMo, NiCoW, NiCoMo, NiMoW and CoMoW, oxides or sulphides |
| Catalytic Decarboxylation | |
| | Supported group 10 (Ni, Pt, Pd) or group 11 (Cu, Ag) metals or alloys |
| | Basic oxides or mixed basic oxides |

The first option consists in hydrodeoxygenation, which removes the oxygen atoms from the fats & oils. This can be done on fatty acid esters (FAE) (mainly triglycerides), free fatty acids (FFA) or mixtures of FAE and FFA.

Suitable catalysts for this first option are the supported Ni, Mo, W, Co, NiW, NiMo, CoMo, NiCoW, NiCoMo, NiMoW and CoMoW, oxides or sulphides mentioned in table 6.

The second option consists in decarboxylation or decarbonylation of free fatty acids, more precisely of the acyl-moiety.

Suitable catalysts for this first option are all the catalysts mentioned in table 4.

These two options are detailed below.

First option : hydrogeoxygenation

Hydrodeoxygenation of fats & oils has been reported in 1989 (W.H. Craig and D.W. Soveran, "Production of hydrocarbons with relatively high cetane rating", US 4992605 and Gusmao J, Brodzki D, Djéga-Mariadassou G, Frety R., "Utilization of vegetable oils as an alternative source for diesel-type fuel: Hydrocracking on reduced Ni/SiO2 and sulphided Ni-Mo/γ-Al2O3", Cat. Today 1989 (5) 533) in which conventional CoMo or NiMo sulphided catalysts are used. These catalysts are well known in hydrodesulphurization and are know to catalyze also hydrodeoxygenation (E. Furimsky,

Applied Catalysis A, General, 199, pages 147-190, 2000).

Hydrodeoxygenation of fats & oils is preferentially done in continuous fixed bed reactors, continuous stirred tank reactors or slurry type reactors containing solid catalyst that can be selected among Ni, Mo, W, Co or mixtures like NiW, NiMo, CoMo, NiCoW, NiCoMo, NiMoW and CoMoW oxides or sulphides as catalytic phase, preferably supported on carbon, alumina, silica, titania or zirconia.

It is preferred that the support for the catalytic active phase exhibit high surface area. In one embodiment, the surface area should be at least 5 $m^2$ per gram, preferentially at least 50 $m^2$ per gram and most preferable at least 75 $m^2$ per gram, such specific surface area can be measured with methods known by the art like the BET method where the adsorption of nitrogen allows to estimate the specific surface area of the solid material.

It is preferred that the support for the catalytic active phase exhibit low acidity, preferable neutral or basic in order to avoid hydro-isomerisation reactions that would result in branched paraffin's and cracking at elevated temperature and pressure in the presence of dihydrogen.

The hydrodeoxygenation of refined oil or pre-treated oil is carried out at a temperature from 200 to 500°C, preferably from 220 to 400°C, under a pressure from 1 MPa to 10 MPa (10 to 100 bars), for example of 6 MPa, and with a dihydrogen to oil feed ratio from 100 to 2000, but preferably from 350 to 1500, for example of 800 Nl $H_2$/l oil.

The hydrodeoxygenation of the free fatty acids recovered from the optional hydrolysis step is carried out at a temperature from 200 to 500°C, preferably from 250 to 400°C, under a pressure from 1 MPa to 10 MPa (10 to 100 bars), for example of 6 MPa, and with a dihydrogen to refined oils ratio from 100 to 2000 Nl/l, for example of 600 Nl H2/l oil.

For optimum performance and stable continuous operation, it is preferred that the active metal component of the catalyst in case of Ni, Mo, W, Co or mixtures, is in the form of sulphides. Thereto, it is preferred that traces amounts of decomposable (thermal or catalytically) sulphur compounds are present or added on purpose to the feedstock in order to keep the metal sulphide in its sulphide state. By way of example, these sulphur compounds can be $H_2S$, COS, $CS_2$, mercaptans (e.g. methylsulfide), thio-ethers (e.g. DiMethylSulfide), disulfides (e.g. DiMethyldiSulfide), thiophenic and tetrahydrothiophenic compounds.

Under hydrodeoxygenation conditions several reactions occur. The easiest is the hydrogenation of the double bonds in the alkyl-chain. The more difficult reaction is the removal of oxygen atoms from the C-O bonds. Both the carboxyl-group of the fatty acid as the hydroxylgroup of the glycerol-moiety are hydrodeoxygenated. This results in the production of linear paraffin, resulting from the acyl-moiety, and in propane, resulting from glycerol. Depending on the conditions (catalyst, temperature, dihydrogen etc), the carboxyl-group can also be decomposed into CO/$CO_2$ (decarboxylation or decarbonylation) and which on their turn can be even further hydrogenated into methane. These hydrodeoxygenation reactions consume a lot of dihydrogen.

As way of example is given the equation for triolein hydrodeoxygenation:

$$[C_{18}H_{33}O]_3C_3H_5O_3 + 15\ H_2 \rightarrow 3\ C_{18}H_{38} + C_3H_8 + 6\ H_2O$$

Hydrodeoxygenation of fatty acids:

$$R\text{-}CH_2\text{-}CH_2\text{-}COOH + 3\ H_2 \rightarrow R\text{-}CH_2\text{-}CH_2\text{-}CH_3 + 2\ H_2O$$

Second option: decarboxylation/ decarbonylation

Decarboxylation of carboxylic acids has been reported in 1982 (W.F. Maier, Chemische Berichte, 115, pages 808-812, 1982) over Pd/$SiO_2$ and Ni/$Al_2O_3$ catalysts in the gas phase. A highly selective decarboxylation has been reported in 2005 (I. Kubickova, Catalysis Today, 106, pages 197-200, 2005 and M. Snare, Industrial Engineering, Chemistry Research, 45, p. 5708-5715, 2006) using transition metal catalysts. Palladium based catalysts exhibit the highest selectivity towards decarboxylation. Carboxylic acids can also be decarboxylated under catalytic conditions using basic catalyst, like MgO, ZnO and mixed basic oxides (A. Zhang *, Q. Ma, K. Wang, X. Liu, P. Shuler, Y. Tang, "Naphthenic acid removal from crude oil through catalytic decarboxylation on magnesium oxide", Applied Catalysis A: General 303, p. 103, 2006; A. More, John R. Schlup, and Keith L. Hohn "Preliminary Investigations of the Catalytic Deoxygenation of Fatty Acids", AIChe, The 2006 annual meeting, San Francisco and B. Kitiyanan, C. Ung-jinda, V. Meeyoo, "Catalytic deoxygenation of oleic acid over ceria-zirconia catalysts", AIChe The 2008 annual meeting).

The following reactions can occur:

Decarboxylation:

$$R\text{-}CH_2\text{-}CH_2\text{-}COOH \rightarrow R\text{-}CH_2\text{-}CH_3 + CO_2$$

$$[C_{18}H_{33}O]_3C_3H_5O_3 + 6\ H_2 \rightarrow 3\ C_{17}H_{36} + 3\ CO_2 + C_3H_8$$

Decarbonylation:

$$R\text{-}CH_2\text{-}CH_2\text{-}COOH \rightarrow R\text{-}CH{=}CH_2 + CO + H_2O$$

Further hydrogenation of the intermediate $CO/CO_2$ can occur depending on the amount of available dihydrogen, the catalyst and the operating conditions:

$$CO + 3\ H_2 \rightarrow CH_4 + H_2O$$

$$CO_2 + 4\ H_2 \rightarrow CH_4 + 2\ H_2O$$

Decarboxylation is preferentially done in presence of solid catalyst in batch type tank reactors, continuous fixed bed type reactors, continuous stirred tank reactors or slurry type reactors. Decarboxylation can occur directly with glycerides, any esters or with free fatty acids.

The catalyst can be selected among :

- Ni, Mo, W Co or mixtures like NiW, NiMo, CoMo, NiCoW, NiCoMo, NiMoW and CoMoW oxides or sulphides as catalytic phase, preferably supported on carbon, alumina, silica, titania or zirconia, or
- group 10 (Ni, Pt and Pd) and group 11 (Cu and Ag) metals or alloy mixtures supported on carbon, magnesia, zinc-oxide, spinels ($Mg_2A]\text{-}_2O_4$, $ZnAl_2O_4$), perovskites (BaTiO3, ZnTiO3),calciumsilicates (like xonotlite), alumina, silica or silica-alumina's or mixtures of the latter.

For optimum performance and stable continuous operation, it is preferred that the active metal component of the catalyst in case of Ni, Mo, W, Co or mixtures, is in the form of sulphides. Thereto, it is preferred that traces amounts of decomposable (thermal or catalytically) sulphur compounds are present or added on purpose to the feedstock in order to keep the metal sulphide in its sulphide state. By way of example, these sulphur compounds can be $H_2S$, COS, $CS_2$, mercaptans (e.g. methylsulfide), thio-ethers (e.g. DiMethylSulfide), disulfides (e.g. DiMethyldiSulfide), thiophenic and tetrahydrothiophenic compounds.

It is preferred that the support for the catalytic active phase exhibit high surface area. In one embodiment, the surface area should be at least 5 $m^2$ per gram, preferentially at least 50 $m^2$ per gram and most preferable at least 75 $m^2$ per gram, such specific surface area can be measured with methods known by the art like the BET method where the adsorption of nitrogen allows to estimate the specific surface area of the solid material.

It is preferred that the support for the catalytic active phase exhibit low acidity, preferable neutral or basic in order to avoid hydro-isomerisation reactions that would result in branched paraffin's and cracking.

Decarboxylation can also be carried out on basic oxides, like alkaline oxides, alkaline earth oxides, lanthanide oxides, zinc-oxide, spinels ($Mg_2Al_2O_4$, $ZnAl_2O_4$), perovskites (BaTiO3, ZnTiO3), calciumsilicates (like xonotlite), either as bulk material or dispersed on neutral or basic carriers, on basic zeolites (like alkali or alkaline earth low silica/alumina zeolites obtained by exchange or impregnation).

Although, the decarboxylation reaction does not require dihydrogen, it is preferred that the decarboxylation is done in presence of dihydrogen that will stabilise the catalytic activity by removing strongly adsorbed unsaturated species (for instance when decarbonylation is the prevalent reaction pathway) from the catalyst surface by hydrogen-addition reactions. The presence of dihydrogen can also hydrogenate the double bonds present in the acyl-moiety of the fatty acid in order to obtain paraffinic reaction products from the decarboxylation process.

The decarboxylation of the free fatty acids, more precisely from the acyl-moieties, is carried out at 100 to 550°C in presence of dihydrogen at pressures ranging from 0.01 up to 10 MPa. The dihydrogen to feedstock ratio is from 100 to 2000 Nl/l.

Other reactions that can occur under the decarboxylation conditions are:

$$R\text{-}CH{=}CH_2 + H_2 \rightarrow R\text{-}CH_2\text{-}CH_3$$

Hydrodeoxygenation of fatty acids:

$$R\text{-}CH_2\text{-}CH_2\text{-}COOH + 3\ H_2 \rightarrow R\text{-}CH_2\text{-}CH_2\text{-}CH_3 + 2\ H_2O$$

Further hydrogenation of the intermediate $CO/CO_2$ can occur depending on the amount of available dihydrogen, the catalyst and the operating conditions:

$$CO + 3\ H_2 \rightarrow CH_4 + H_2O$$

$$CO_2 + 4\ H_2 \rightarrow CH_4 + 2\ H_2O$$

## OPTIONAL STEP OF SEPARATION OF NON-CONDENSABLE COMPOUNDS and WATER

In a preferred embodiment, the effluent of the hydroprocessing step is submitted, in particular directly, to a separation of non-condensable components such as propane, $CO_2$, CO, methane, dihydrogen and vaporous water.

Such separation is for example a flash separation or performed in a stripping section.

Eventually, depending on the operating conditions, some remaining water may be condensed and further also be removed in this optional step by decantation or draining. The flash separation and liquid water draining might be done simultaneously.

## HYDROCRACKING-HYDROISOMERISATION OF THE PARAFFINS

All or part of the hydroprocessed refined oil produced in step c) can be submitted, in particular directly, to a hydrocracking - hydroisomerisation reaction in presence of dihydrogen and of at least one catalyst to obtain an effluent and fractionating said effluent into dihydrogen, non-condensable hydrocarbons, LPG, naphtha, Jet fuel and diesel fractions.

The liquid portion obtained from the hydroprocessing step comprises a hydrocarbon fraction consisting essentially of n-paraffins having about 9 to about 24 carbon atoms.

A portion of this hydrocarbon fraction, after separation, may be used as hydrocarbon recycle to the deoxygenation section in order to absorb reaction heat, to dilute the deteriorating effect of remaining impurities or to bring more dihydrogen as dissolved dihydrogen to the deoxygenation section.

Although this hydrocarbon fraction is useful as a diesel fuel, because it comprises high cetane n-paraffins, it will have poor cold flow properties. If it is desired to improve the cold flow properties of the liquid hydrocarbon fraction, then the reaction product can be hydroisomerized under isomerization conditions to at least partially isomerize the n-paraffins to isoparaffins or if it is desired to produce more naphtha like or jet fuel like hydrocarbons, then the reaction product can be hydrocracked under hydrocracking conditions to at least crack partially the n-paraffins into shorter carbon chain n-paraffins and isoparaffins.

Suitable hydrocracking or hydroisomerisation catalysts used in hydrocracking or hydroisomerisation processes are all of the bifunctional type combining an acid function with a (de)hydrogenating function.

The acid function is supplied by a carrier (amorphous or crystalline), the surface areas of which are generally in the range from 100 to 700 $m^2$ per gram and have surface acidity, such as halogenated (in particular sulphated, phosphatated, chlorinated or fluorinated) aluminas (eventually containing some boron), amorphous silica-aluminas, amorphous silica-alumina-titania, sulphated zirconia's, tungstated zirconia's and Zeolites or a mixture thereof. The acidity can be measured by methods well known to the skilled person. It can, for example, be made by temperature programmed desorption (TPD) with ammonia, by infrared measurement of absorbed molecules (pyridine, CO . . . ), by a catalytic cracking test or by hydroconversion using a model molecule.

The (de)hydrogenating function is supplied either by one or more metals of group VIB of the periodic table of the elements, or by a combination of at least one metal of group VIB of the periodic table and at least one group VIII metal.

The distance between the two functions, acid and (de)hydrogenating, is one of the key parameters governing the activity and selectivity of the catalyst.

A weak acid function and a strong hydrogenating function give catalysts of low activity, generally requiring high temperature (greater than or equal to 390-400°C), and long residence times or at a low hourly space velocity (LHSV expressed in liquid volume of feed to be treated per unit volume of catalyst and per hour is generally less than or equal to 2), but have very good selectivity for middle distillates (jet fuels and diesel fuels). In general, the term "middle distillates" as used in this invention is applied to fraction(s) with an initial boiling point of at least 150°C and an end point of generally up to about 350° C, preferably less than 370°C.

Conversely, a strong acid function and a weak hydrogenating function give catalysts that are active, but have poorer selectivity for middle distillates and result is more cracked hydrocarbons in the range of naphtha and jet fuels.

One type of conventional hydrocracking catalyst is based on amorphous carriers that are moderately acidic, such as silica-aluminas for example. These systems are used for maximizing middle distillates of good cold-flow properties. Such catalyst maximized hydroisomerisation over hydrocracking.

Catalysts and conditions for hydrocracking and hydroisomerization are well known in the art.

If isomerization is desired, the hydrocarbons of the deoxygenation section are contacted with an isomerization catalyst in the presence of dihydrogen at isomerization conditions to isomerize the normal paraffins to branched paraffins.

The cracking or isomerization of the paraffinic product can be accomplished in any manner known in the art or by using any suitable catalyst known in the art.

The acidic carrier material may be amorphous or crystalline. Suitable support materials include amorphous alumina, amorphous silica-alumina, amorphous silica-borate, amorphous silica-alumina-titania, zeolites or modified zeolites having the following structures like ferrierite, zeolite beta, zeolite Y, zeolite mordenite and molecular sieves of the type ALPO-31, SAPO-11, SAPO-31, SAPO-37, SAPO-41, SM-3, MgAPSO-31, FU-9, NU-10, NU-23, ZSM-12, ZSM-22, ZSM-23, ZSM-35, ZSM-38, ZSM-48, ZSM-50, ZSM-57, theta-1, EU-1, EU-13, ISI-1, KZ-2, ISI-4 and KZ-1, MeAPO-11, MeAPO-31, MeAPO-41, MeAPSO-11, MeAPSO-31, MeAPSO-41, MeAPSO-46, ELAPO-11, ELAPO-31, ELAPO-41, ELAPSO-11, ELAPSO-31, ELAPSO-41, each of which may be used alone or in combination.

When hydrocracking needs to be promoted, catalysts comprising zeolites for example Zeolite Y of the structural type FAU might be selected having catalytic activity that is greater than that of silica-aluminas, but have lower selectivity for middle distillates or maintaining the number of carbons constant. This difference is attributed to the difference in strength of the acid sites. As explained above the distance between the (de)hydrogenation function and the acid sites is important to optimize the synergy between the two catalytic functions. As the pore size of zeolites in imposed by the crystalline structure and in the order to 4 to 13 angstrom diffusion limitation of reactants towards the acid site and the diffusion of reaction products away from the acid sites might impact the selectivity. Introducing mesopores into the zeolite has been reported to improve selectivity to middle distillates. Introducing mesopores is well known in the art and can be carried out by acid or alkali treatments.

The production of the bifunctional hydrocracking or hydroisomerisation catalyst can be carried out by any method known in the art. The (de)hydrogenation function can be added to the acidic carrier by impregnation of metal-containing solutions, by ion-exchange and mixing.

The hydrocracking and hydroisomerisation steps can be carried out using one or several types of catalysts in a plurality (one or more) of catalyst beds in the same reactor or in a plurality of different reactors. The feedstock to the hydrocracking or hydroisomerisation can be sent over the catalyst simultaneously with the dihydrogen-containing gases in a downflow mode, in an upflow mode or the liquid feedstock can flow in downflow while the dihydrogen-containing gases flow in upflow mode through the catalyst beds.

Hydrocracking or hydroisomerization conditions include a temperature of about 150°C to about 500°C or more preferable of about 220°C to about 450°C and most preferable of 250 to about 420°C and a pressure of about 1 MPa to about 15 MPa or more preferable of about 1.5 MPa to about 9 MPa and most preferred of about 2 MPa to about 6 MPa. The hourly space velocity is about 0.1 to 20 $h^{-1}$, more preferably 0.2 to 10 $h^{-1}$ and most preferably 0.3 to 4 $h^{-1}$. The supplied dihydrogen-containing gases are introduced simultaneously with the feedstock at a ratio of 75 to 2500 Nl $(H_2)$/l of liquid feedstock, more preferably of 150 to 1500 or most preferably of 250 to 1000.

The hydrocracking or hydroisomerisation of the hydrocarbons coming from the deoxygenation section can be carried out with the same catalyst while the operating temperature allows to control the extent of cracking relative to isomerization.

In case a large flexibility between isomerisation and cracking is desired the preferred catalysts are nonzeolitic in nature. When a high degree of cracked products (like naphtha and jet fuels) are desired a zeolitic catalyst is recommended.

Means to control the degree of hydrocracking versus hydroisomerisation are (i) the proper selection of the catalyst, (ii) controlling the temperature of the catalyst, (iii) controlling the hourly space velocity and (iv) controlling the dihydrogen to liquid feedstock ration.

Other indirect means to control the relative ratio of hydrocracking and hydroisomerisation by influencing the above mentioned parameters is by optimizing the quenching of the reactor content. Often quenching is applied in order to control the temperature rise during exothermic hydrocracking. By quenching more with either additional cold dihydrogen and by cold fresh feedstock or cold recycle stream a lower average catalyst bed temperature can be controlled. Still another way to control the degree of hydrocracked products is to recycle non-cracked product effluent after separation of the desired reaction products back to the inlet of the hydrocracking or hydroisomerisation reactor.

## STEAMCRACKING OF THE PARAFFINS

All or part of the hydroprocessed refined oil produced in step c) can be fed, in particular directly, to a steamcracker unit.

Steam crackers are complex industrial facilities that can be divided into three main zones, each of which has several types of equipment with very specific functions: (i) the hot zone including: pyrolysis or cracking furnaces, quench exchanger, hot separation columns, (ii) the compression zone including: a cracked gas compressor, purification and separation columns, dryers and (iii) the cold zone including: the cold box, de-methaniser, fractionating columns of the cold separation train, the C2 and C3 converters, the gasoline hydrostabilization reactor. Hydrocarbon cracking is carried out in tubular reactors in direct-fired heaters (furnaces). Various tube sizes and configurations can be used, such as

coiled tube, U-tube, or straight tube layouts. Tube diameters range from 1 to 4 inches. Each furnace consists of a convection zone in which the waste heat is recovered to raise steam as dilution steam or as utility for the plant and to preheat the feedstock and a radiant zone in which pyrolysis takes place. The feedstock mixture is preheated in the convection zone to about 300-650°C or the feedstock is preheated in the convection section and subsequently mixed with dilution steam before it flows over to the radiant zone, where pyrolysis takes place at coil outlet temperatures varying from 800 to 900°C and residence times from 0.01 to 1 second, depending on the feedstock type and the cracking severity desired. In the case of a naphtha steam cracker the coil outlet temperature is of at least 820°C with a steam to hydrocarbon ratio of 0.6 whereas in the case of a gasoil the steam to hydrocarbon ratio has to be increased or the temperature has to be decreased to avoid a too rapid coking. As mentioned above, in an advantageous embodiment, the residence time is from 0.05 to 0.5 seconds, preferably from 0.1 to 0.4 seconds. The steam/feedstock mixture weight ratio preferentially ranges from 0.25 to 0.7 kg/kg, preferably from 0.30 to 0.6 kg/kg, more preferably is of 0.35 to 0.4 kg/kg. For steam cracking furnaces, the severity can be modulated by: temperature, residence time and partial pressure of hydrocarbons. The coil outlet pressure may range from 750 to 950 mbars, preferably from 800 to 900 mbars, more preferably may be approx. 850 mbars. The residence time of the feed in the coil and the temperature are to be considered together. Rate of coke formation will determine maximum acceptable severity. A lower operating pressure results in easier light olefins formation and reduced coke formation. The lowest pressure possible is accomplished by (i) maintaining the output pressure of the coils as close as possible to atmospheric pressure at the suction of the cracked gas compressor, (ii) reducing the pressure of the hydrocarbons by dilution with steam (which has a substantial influence on slowing down coke formation). The steam/feedstock ratio may be maintained at a level sufficient to limit coke formation.

Effluent from the pyrolysis furnaces contains unreacted feedstock, desired olefins (mainly ethylene and propylene), dihydrogen, methane, a mixture of C4's (primarily isobutylene and butadiene), pyrolysis gasoline (aromatics in the C6 to C8 range), ethane, propane, diolefins (acetylene, methyl acetylene, propadiene), and heavier hydrocarbons that boil in the temperature range of fuel oil (pyrolysis fuel oil).

## Brief description of the drawings

Figure 1 represents table 1.

Figure 2 schematically represents units used to carry out the process according to various particular embodiments of the present invention.

## Detailed description of the present invention

Figure 2 demonstrates the different processing units and intermediate product streams of an embodiment of the present invention.

In the present description, "hydrogen" stands for "dihydrogen".

Raw (crude) fats & oil (2) coming from a production unit (not represented) where oil-bearing feedstock's are rendered and extracted to obtain the raw fats & oils (1) . These raw fats & oils (2) are sent to a hydrodynamic cavitation unit (4) to degum the raw fats & oils (1). Hereto, water, acids and/or complexing agents are added to the raw fats & oils (3). Typical acids are phosphoric acid, sulphuric acid and typical complexing weak organic acids are acetic, citric, maleic, oxalic acid or EDTA. According to the nature of the phosphatides, the amount of water and acid or complexing agents is adjusted.

Optionally before the hydrodynamic cavitation, a water degumming (not represented) can be added to remove at least partially the hydratable phosphatides and partially metal-containing compounds.

After the hydrodynamic cavitation step the gums (6) and the aqueous phase (8) are separated by filtration, decantation and centrifugation (5).

Eventually the obtained refined fats & oils (9) can be dried by vacuum distillation techniques.

The raw fats & oils that are treated in the hydrodynamic cavitation device (4) can be recycled back partially (7) to the inlet of the hydrodynamic cavitation device (4) in order to improve the degumming process. To this recycle stream (7) additional water, acids and/or complexing agents can be added.

As an alternative operation multiple hydrodynamic cavitation devices can be put in series and/or in parallel

Optionally the degumming can be further improved by recycling part of the degummed fats & oils (8) back to the inlet of the hydrodynamic cavitation device (4). To this recycle stream (8) additional water, acids and/or complexing agents can be added.

Degummed oil (9) is obtained. When the phosphorous and other metals concentration is low enough in order not to plug the preheatment section, solid catalyst bed or not to poison the downstream solid catalyst, the degummed oil constitute the refined fats & oils (10).

Optionally, when the phosphorous and other metals concentration is not low enough in order not to plug the preheatment section, solid catalyst bed or not to poison the downstream solid catalyst the degummed oil can be further pre-treated, here bleached (11) and the bleached product constitutes the refined fats & oils (10). In the bleaching step adsorbents like activated clays, amorphous silica gels or activated carbon are used to adsorb remaining phosphatides and order metal compounds. The adsorbents is removed and disposed of (12). This optional bleaching may be replaced or complemented by the other pretreatments previously mentioned.

The refined fats & oils (10) are sent to the hydrodeoxygenation, decarboxylation , decarbonylation step that includes solid catalysts (20). A dihydrogen containing stream is added to this step (21).

After the hydrodeoxygenation, decarboxylation , decarbonylation step the non-condensables, like propane, $CO_2$ and dihydrogen are flashed off (22) the condensable liquid paraffin's. Also any produced liquid water is removed (22).

The non-converted dihydrogen is recovered and optionally recycled back to the inlet of the hydrodeoxygenation, decarboxylation, decarbonylation step (23) .

The obtained paraffins (24) have essentially the same number of carbons as the acyl-moieties of the original fats & oils in case the reaction mechanism is purely hydrodeoxygenation and the obtained paraffins (24) have essentially one carbon less as the acyl-moieties of the original fats & oils in case the reaction mechanism is purely decarboxylation or decarbonylation.

The obtained bio-paraffin's (24) can be used as steamcracker feedstock (30).

The obtained bio-paraffin's (24) can further be treated to improve its cold-flow properties by hydrocracking - hydroisomerisation (40) by adding a dihydrogen containing steam (41) and sending the mixture over a hydrocracking - hydroisomerisation solid catalyst (40). The product of the hydrocracking - hydroisomerisation (50) is fractionated (42) into dihydrogen, LPG, naphtha, Jet fuel and diesel fractions. Optionally the dihydrogen stream is recycled back to the hydrocracking - hydroisomerisation section (43). Optionally, a part of the naphtha fraction can be recycled back to the inlet of the hydrodynamic cavitation device (not represented). To this recycle stream additional water, acids and/or complexing agents can be added. Optionally, a part of the dihydrogen is combined with the feed entering the hydrodynamic cavitation device.

The hydrocarbon fractions (50) can be used as transportation fuels (60) or can be used as special fluids (70). The applications of the special fluids are as propellant, paraffinic solvent or cooling fluids.

By applying hydrodynamic cavitation to the raw fats & oils to remove essentially most of the phosphorous and metal-containing compounds , the present invention allows protecting the hydrodeoxygenation or decarboxylation/decarbonylation section including a preheating section and a solid catalyst section.

Examples:

Examples 1-4 have been performed using a laboratory hydrodynamic cavitation device fabricated by installing a Venturi tube in a hydrodynamic cavitation setup equipped with a pump at the inlet and a pressure controller at the outlet. The Venturi tube has an orifice opening (throat diameter) of 0.75 mm and an orifice length (throat length) of 1 mm, a wall of 25° inclination (related to the flow axe) at the inlet (convergent section) and a wall of 6° inclination (related to the flow axe) at the outlet (divergent section). The pipes to the Venturi convergent and divergent sections have a diameter of 5 mm and a length of 50 mm.

The phosphorus content of raw rapeseed and hydrodynamic cavitation processed product has been measured by means of ICP (Inductive Coupled Plasma).

Ex. 1 :

Raw rapeseed oil (10 kg) was mixed with 2 wt% water, well mixed and pressure increased with the aid of the pump in order to have a ratio outlet pressure to inlet pressure of less than 0.75. At an outlet pressure of 2 bars the mixture rapeseed oil and water was passed through the hydrodynamic cavitation device at 40°C. While the raw rapeseed oil had a phosphorus content of 811 wppm the rapeseed product after cavitation treatment and separation of the aqueous phase by centrifugation, has a phosphorus content of 26 wppm.

Ex.2:

The raw rapeseed oil (10 kg) was mixed with 2 wt% of a water solution containing 10wt% of citric acid (0.2 wt% citric acid on oil basis)and stirred vigorously for 30 minutes. The pressure was increased with the aid of the pump in order to have a ratio outlet pressure to inlet pressure of less than 0.75. At an outlet pressure of 2 bars the mixture rapeseed oil and water was passed through the hydrodynamic cavitation device at 40°C. While the raw rapeseed oil had a phosphorus content of 811 wppm the rapeseed product after cavitation treatment and separation of the aqueous phase by centrifugation, has a phosphorus content of 1 wppm.

Comparative Ex.3:

Raw rapeseed oil (10 kg) was mixed with 2 wt% water, well mixed and heated to 65°C during 30 minutes in a lab vessel at a stirring speed of 500 rpm. The aqueous phase was separated by centrifugation. The phosphorus content has dropped from 811 wppm to 120 wppm.

Comparative Ex.4:

Raw rapeseed oil (10 kg) was mixed with 2 wt% of a water solution containing 10wt% of citric acid (0.2 wt% citric acid on oil basis), well mixed and heated to 65°C during 30 minutes in a lab vessel at a stirring speed of 500 rpm. The aqueous phase was separated by centrifugation. The phosphorus content has dropped from 811 wppm to 51 wppm.

Ex.5:

In a small pilot unit, a nickel-molybdenum on alumina catalyst was loaded and presulphurised with DMDS/SRGO mixture under dihydrogen. The product of example 2, having only 1 wppm of remaining phosphorus was processed in order to deoxygenate the triglycerides at about 275°C and 80 barg (hydrogen to liquid ratio of 900 Nl/l). The LHSV was 1 $h^{-1}$. Nearly full deoxygenation could be reached during more than 1000 hours on stream without any deactivation nor plugging of the pilot unit.

Comparison Ex.6:

In the same small pilot unit, the product of example 4, having still 51 wppm of remaining phosphorus was processed in order to deoxygenate the triglycerides at about 275°C and 80 barg (hydrogen to liquid ratio of 900 Nl/l) . The LHSV was 1 $h^{-1}$. Nearly full deoxygenation could be reached during only 20 hours on stream after which plugging of the pilot unit started with increase of inlet pressure. Semi-quantitative analysis (about 10% error) by means of XRF (X-ray fluorescence spectroscopy) showed that the material constituting the plug was significantly enriched in phosphorus (more than 2000 wppm) compared to only 51 wppm in the feedstock.

## Claims

1. Process for the production of high value bio- chemicals, preferably including paraffins, LPG, jet fuel, diesel and naphtha, from natural occurring oil(s) containing acyl-containing compounds having 10 to 24 carbons including fatty acid esters and free fatty acids, and other components including impurities, comprising the steps of:

   (a) refining the natural occurring oil(s) to remove at least a part of the impurities and to obtain a refined oil,
   (b) optionally pre-treating the refined oil to further remove impurities and to obtain a pre-treated oil,
   (c) hydroprocessing the refined oil or the pre-treated oil in presence of dihydrogen and of at least one catalyst to transform fatty acid esters and free fatty acids contained in said refined oil or pre-treated oil into linear or substantially linear paraffins, where the hydroprocessing is chosen among hydrodeoxygenation and decarboxylation and

      the hydrodeoxygenation is carried out at a temperature from 200 to 500°C, under a pressure from 1 MPa to 10 MPa and with a dihydrogen to oil feed ratio from 100 to 2000 Nl/l,
      the decarboxylation is carried out at 100 to 550°C in presence of dihydrogen at pressures ranging from 0.01 up to 10 MPa, the dihydrogen to feedstock ratio being from 100 to 2000 Nl/l,
      **characterized in that** the refining step (a) includes
      a hydrodynamic cavitation processing of the natural occurring oil(s) in presence of water under conditions efficient to generate cavitation features and to transfer at least a part of impurities contained in the natural occurring oil(s) into an aqueous phase, and
      separating the aqueous phase from an oil phase and recovering the oil phase as a refined oil.

2. Process according to claim 1 wherein the natural occurring oil(s) contain(s)one or several oils chosen among vegetable oil, animal fat, waste oils, by-products of the refining of vegetable oil(s) or of animal oil(s) containing free fatty acids, tall oils, and oil produced by bacteria, yeast, algae, prokaryotes or eukaryotes.

3. Process according to claim 1 or 2, **characterised in that** at least one degumming agent is added to the natural

occurring oil(s) in the hydrodynamic cavitation processing step.

**4.** Process according to claim 3, **characterized in that** the degumming agent is chosen among water, steam, acids and complexing agents.

**5.** Process according to any one of claims 1 to 4, **characterised in that** the pre-treatment performed at step b) is chosen among a bleaching process in which the refined oil is contacted with an absorbent, a process in which the refined oil is contacted with an ion-exchange resin, a mild acid wash of the refined oil, a process using guard-beds, filtration, solvent extraction.

**6.** Process according to any one of claims 1 to 5, **characterised in that** it further comprises

hydrolysing the refined oil or pre-treated oil to transform fatty acid esters contained into the refined oil or pre-treated oil into alcohols and free fatty acids,
sending to the hydroprocessing step, in particular directly, the free fatty acids after alcohols removal.

**7.** Process according to any one of claims 1 to 6, **characterised in that** said at least one catalyst of the hydroprocessing step is chosen among a hydrogeoxygenation catalyst, a decarbonylation catalyst and a decarboxylation catalyst.

**8.** Process according to any one of claims 1 to 7, **characterised in that** it further comprises:
(d) submitting at least a part of the linear or substantially linear paraffins from step c) to a hydrocracking - hydroisomerisation reaction in presence of dihydrogen and of at least one catalyst to obtain an effluent and fractionating said effluent into dihydrogen, LPG, naphtha, Jet fuel and diesel fractions.

**9.** Process according to any one of claims 1 to 8, **characterised in that** a light fraction comprising C4-C15 hydrocarbons, preferably C5-C10 hydrocarbons, is added to the natural occurring oil(s) in the hydrodynamic cavitation processing step.

**10.** Process according to claim 9, **characterised in that** the light fraction is a naphtha fraction, optionally recovered from the fractionation of the effluent from the hydrocracking - hydroisomerisation step (d).

**11.** Process according to any one of claims 1 to 8, **characterised in that** a gas stream comprising dihydrogen, carbon dioxide, dihydrogen sulfide, methane, ethane, propane or mixtures thereof, is added to the natural occurring oil(s) in the hydrodynamic cavitation processing step.

**12.** Process according to any one of claims 1 to 11, **characterised in that** it further comprises :
(e)submitting at least a part of the linear or substantially linear paraffins from step c) to a steamcracking reaction.

## Patentansprüche

**1.** Verfahren zur Herstellung hochwertiger Biochemikalien, vorzugsweise einschließlich Paraffinen, LPG, Düsentreibstoff, Diesel und Naphtha, aus (einem) natürlich vorkommenden Öl/en, die acylhaltige Verbindungen mit 10 bis 24 Kohlenstoffen, einschließlich Fettsäureestern und freien Fettsäuren, und andere Komponenten, einschließlich Verunreinigungen, enthalten, wobei das Verfahren die folgenden Schritte umfasst:

(a) Raffinieren des/der natürlich vorkommenden Öls/Öle, um mindestens einen Teil der Verunreinigungen zu entfernen und ein raffiniertes Öl zu erhalten,
(b) optional Vorbehandeln des raffinierten Öls, um Verunreinigungen weiter zu entfernen und ein vorbehandeltes Öl zu erhalten,
(c) Wasserstoffbehandeln des raffinierten Öls oder des vorbehandelten Öls in Gegenwart von Diwasserstoff und mindestens eines Katalysators, um Fettsäureester und freie Fettsäuren, die in dem raffinierten Öl oder vorbehandelten Öl enthalten sind, in lineare oder im Wesentlichen lineare Paraffine umzuwandeln, wobei das Wasserstoffbehandeln ausgewählt ist aus Hydrodesoxigenierung und Decarboxilierung und die Hydrodesoxigenierung bei einer Temperatur von 200 bis 500 °C unter einem Druck von 1 MPa bis 10 MPa und mit einem Diwasserstoff-Öl-Beschickungsverhältnis von 100 bis 2000 Nl/l durchgeführt wird, die Decarboxilierung bei 100 bis 550 °C in Gegenwart von Diwasserstoff bei Drücken im Bereich von 0,01 bis 10 MPa durchgeführt wird, wobei das Verhältnis von Diwasserstoff zu Einsatzmaterial 100 bis 2000 Nl/l beträgt,

**dadurch gekennzeichnet, dass** der Raffinationsschritt (a) umfasst:

eine hydrodynamische Kavitationsbehandlung des/der natürlich vorkommenden Öls/Öle in Gegenwart von Wasser unter Bedingungen, die wirksam sind, um Kavitationsmerkmale zu erzeugen und mindestens einen Teil der in dem/den natürlich vorkommenden Öl/en enthaltenen Verunreinigungen in eine wässrige Phase zu überführen, und
Abtrennen der wässrigen Phase von einer Ölphase und Gewinnen der Ölphase als raffiniertes Öl.

**2.** Verfahren nach Anspruch 1, wobei das/die natürlich vorkommende/n Öl/e ein oder mehrere Öle enthält/enthalten, die ausgewählt sind aus Pflanzenöl, Tierfett, Altölen, Nebenprodukten der Raffination von Pflanzenöl(en) oder von Tieröl(en), die freie Fettsäuren enthalten, Tallölen und von Bakterien, Hefen, Algen, Prokaryonten oder Eukaryonten produziertem Öl.

**3.** Verfahren nach Anspruch 1 oder 2, **dadurch gekennzeichnet, dass** dem/den natürlich vorkommenden Öl/en im hydrodynamischen Kavitationsbehandlungsschritt mindestens ein Entschleimungsmittel zugesetzt wird.

**4.** Verfahren nach Anspruch 3, **dadurch gekennzeichnet, dass** das Entschleimungsmittel aus Wasser, Wasserdampf, Säuren und Komplexbildnern ausgewählt ist.

**5.** Verfahren nach einem der Ansprüche 1 bis 4, **dadurch gekennzeichnet, dass** die in Schritt b) durchgeführte Vorbehandlung aus einem Bleichverfahren, bei dem das raffinierte Öl mit einem Absorptionsmittel in Kontakt gebracht wird, einem Verfahren, bei dem das raffinierte Öl mit einen Ionenaustauscherharz in Kontakt gebracht wird, einer milden Säurewäsche des raffinierten Öls, einem Verfahren mit Schutzbetten, Filtration, Lösungsmittelextraktion ausgewählt ist.

**6.** Verfahren nach einem der Ansprüche 1 bis 5, **dadurch gekennzeichnet, dass** es ferner umfasst:

Hydrolysieren des raffinierten Öls oder vorbehandelten Öls, um in dem raffinierten Öl oder vorbehandelten Öl enthaltene Fettsäureester in Alkohole und freie Fettsäuren umzuwandeln,
Befördern der freien Fettsäuren nach dem Entfernen der Alkohole zum Wasserstoffbehandlungsschritt, insbesondere direkt.

**7.** Verfahren nach einem der Ansprüche 1 bis 6, **dadurch gekennzeichnet, dass** der mindestens eine Katalysator des Wasserstoffbehandlungsschritts aus einem Hydrodesoxigenierungskatalysator, einem Decarbonylierungskatalysator und einem Decarboxilierungskatalysator ausgewählt ist.

**8.** Verfahren nach einem der Ansprüche 1 bis 7, **dadurch gekennzeichnet, dass** es ferner umfasst:
(d) Unterwerfen mindestens eines Teils der linearen oder im Wesentlichen linearen Paraffine aus Schritt c) einer Hydrocracking-Hydroisomerisierungsreaktion in Gegenwart von Diwasserstoff und mindestens eines Katalysators, um einen Abstrom zu erhalten, und Fraktionieren des Abstroms in Diwasserstoff, LPG, Naphtha, Düsentreibstoff und Dieselfraktionen.

**9.** Verfahren nach einem der Ansprüche 1 bis 8, **dadurch gekennzeichnet, dass** eine leichte Fraktion, die C4-C15-Kohlenwasserstoffe umfasst, vorzugsweise C5-C10-Kohlenwasserstoffe, dem/den natürlich vorkommenden Öl/en im hydrodynamischen Kavitationsverarbeitungsschritt zugesetzt wird.

**10.** Verfahren nach Anspruch 9, **dadurch gekennzeichnet, dass** die leichte Fraktion eine Naphtha-Fraktion ist, die gegebenenfalls aus der Fraktionierung des Abstroms aus dem Hydrocracking-Hydroisomerisierungsschritt (d) gewonnen wird.

**11.** Verfahren nach einem der Ansprüche 1 bis 8, **dadurch gekennzeichnet, dass** dem/den natürlich vorkommenden Öl/en bei dem hydrodynamischen Kavitationsbehandlungsschritt ein Gasstrom zugesetzt wird, der Diwasserstoff, Kohlendioxid, Dihydrogensulfid, Methan, Ethan, Propan oder Mischungen davon umfasst.

**12.** Verfahren nach einem der Ansprüche 1 bis 11, **dadurch gekennzeichnet, dass** es ferner umfasst:
(e) Unterwerfen mindestens eines Teils der linearen oder im Wesentlichen linearen Paraffine aus Schritt c) einer Dampfcrackreaktion.

## Revendications

1. Procédé de production de produits biochimiques de haute valeur, comprenant de préférence des paraffines, du GPL, du carburéacteur, du diesel et du naphta, à partir d'une ou de plusieurs huiles naturelles contenant des composés contenant des acyles ayant de 10 à 24 carbones, y compris des esters d'acides gras et des acides gras libres, et d'autres composants comprenant des impuretés, comprenant les étapes de :

   (a) raffinage de la ou des huiles naturelles pour éliminer au moins une partie des impuretés et pour obtenir une huile raffinée,
   (b) éventuellement le prétraitement de l'huile raffinée pour éliminer davantage les impuretés et obtenir une huile prétraitée,
   (c) l'hydrotraitement de l'huile raffinée ou de l'huile prétraitée en présence de dihydrogène et d'au moins un catalyseur pour transformer les esters d'acides gras et les acides gras libres contenus dans ladite huile raffinée ou huile prétraitée en paraffines linéaires ou sensiblement linéaires, l'hydrotraitement étant choisi parmi l'hydrodésoxygénation et la décarboxylation et l'hydrodésoxygénation étant réalisée à une température de 200 à 500 °C, à une pression de 1 MPa à 10 MPa et avec un rapport du dihydrogène à l'alimentation en huile de 100 à 2000 Nl/l, la décarboxylation étant réalisée à 100 à 550 °C en présence de dihydrogène à des pressions allant de 0,01 à 10 MPa, le rapport du dihydrogène aux matières premières étant de 100 à 2000 Nl/l,

   **caractérisé en ce que** l'étape de raffinage (a) comprend

   un traitement par cavitation hydrodynamique de la ou des huiles naturelles en présence d'eau dans des conditions efficaces pour générer des caractéristiques de cavitation et pour transférer au moins une partie des impuretés contenues dans la ou les huiles naturelles dans une phase aqueuse, et
   la séparation de la phase aqueuse d'une phase huileuse et la récupération de la phase huileuse sous forme d'huile raffinée.

2. Procédé selon la revendication 1 dans lequel la ou les huiles naturelles contiennent une ou plusieurs huiles choisies parmi une huile végétale, une matière grasse animale, des huiles usagées, des sous-produits du raffinage d'une ou plusieurs huiles végétales ou huiles animales contenant des acides gras libres, les tallols et une huile produite par des bactéries, des levures, des algues, des procaryotes ou des eucaryotes.

3. Procédé selon la revendication 1 ou 2, **caractérisé en ce qu'**au moins un agent de dégommage est ajouté à la ou aux huiles naturelles dans l'étape de traitement par cavitation hydrodynamique.

4. Procédé selon la revendication 3, **caractérisé en ce que** l'agent de dégommage est choisi parmi l'eau, la vapeur, les acides et les agents complexants.

5. Procédé selon l'une quelconque des revendications 1 à 4, **caractérisé en ce que** le prétraitement effectué à l'étape b) est choisi parmi un procédé de blanchiment dans lequel l'huile raffinée est mise en contact avec un absorbant, un procédé dans lequel l'huile raffinée est mise en contact avec une résine échangeuse d'ions, un lavage acide doux de l'huile raffinée, un procédé utilisant des lits de garde, une filtration, une extraction par solvant.

6. Procédé selon l'une quelconque des revendications 1 à 5, **caractérisé en ce qu'**il comprend en outre

   l'hydrolyse de l'huile raffinée ou de l'huile prétraitée pour transformer les esters d'acides gras contenus dans l'huile raffinée ou l'huile prétraitée en alcools et en acides gras libres,
   l'envoi à l'étape d'hydrotraitement, en particulier directement, des acides gras libres après élimination des alcools.

7. Procédé selon l'une quelconque des revendications 1 à 6, **caractérisé en ce que** ledit au moins un catalyseur de l'étape d'hydrotraitement est choisi parmi un catalyseur d'hydrodésoxygénation, un catalyseur de décarbonylation et un catalyseur de décarboxylation.

8. Procédé selon l'une quelconque des revendications 1 à 7, **caractérisé en ce qu'**il comprend en outre :
   (d) la soumission d'au moins une partie des paraffines linéaires ou sensiblement linéaires de l'étape c) à une réaction d'hydrocraquage-hydroisomérisation en présence de dihydrogène et d'au moins un catalyseur pour obtenir un effluent et le fractionnement dudit effluent en fractions dihydrogène, GPL, naphta, carburéacteur et diesel.

9. Procédé selon l'une quelconque des revendications 1 à 8, **caractérisé en ce qu'**une fraction légère comprenant des hydrocarbures en C4-C15, de préférence des hydrocarbures en C5-C10, est ajoutée à la ou aux huiles naturelles dans l'étape de traitement par cavitation hydrodynamique.

10. Procédé selon la revendication 9, **caractérisé en ce que** la fraction légère est une fraction naphta, éventuellement récupérée du fractionnement de l'effluent de l'étape d'hydrocraquage-hydroisomérisation (d).

11. Procédé selon l'une quelconque des revendications 1 à 8, **caractérisé en ce qu'**un flux gazeux comprenant du dihydrogène, du dioxyde de carbone, du sulfure de dihydrogène, du méthane, de l'éthane, du propane ou leurs mélanges est ajouté à la ou aux huiles naturelles dans l'étape de traitement par cavitation hydrodynamique.

12. Procédé selon l'une quelconque des revendications 1 à 11, **caractérisé en ce qu'**il comprend en outre :
(e) la soumission d'au moins une partie des paraffines linéaires ou sensiblement linéaires de l'étape c) à une réaction de vapocraquage.

Figure 1

Table 1

| | Symbol | Cotton-seed | Coconut | Corn | Palm Kernel | Peanut | Palm | Linseed | Rice brawn | Rape-seed | Olive | Soy-bean | Sun-flower | Linola | Lard | Butterfat | Tallow Grease | Tall | Castor | Jatropha |
|---|---|---|---|---|---|---|---|---|---|---|---|---|---|---|---|---|---|---|---|---|
| Saturated | | | | | | | | | | | | | | | | | | | | |
| Caproic | 6:0 | | 0.4 | | 0.2 | | | | | | | | | | | 2 | | | | |
| Caprylic | 8:0 | | 7.3 | | 3.3 | | | | | | | | | | | 2 | | | | |
| Capric | 10:0 | | 6.6 | | 3.5 | | | | | | | | | | | 3 | | | | |
| Lauric | 12:0 | | 47.8 | | 47.8 | | 0.2 | | | | | | 0.5 | | 0.5 | 3.5 | | | | |
| Myristic | 14:0 | 0.9 | 18.1 | | 16.3 | 0.1 | 1.1 | | 0.4 | | 0.02 | 0.1 | 0.2 | | 1.5 | 11 | 3 | | | |
| Palmitic | 16:0 | 24.7 | 8.9 | 10.9 | 8.5 | 11.6 | 44.1 | 6.0 | 19.8 | 3.9 | 10.5 | 11.0 | 6.8 | 5.6 | 26 | 26 | 26 | 2 | 1.0 | 14.6 |
| Margaric | 17:0 | | | | | | | | | | 0.05 | | | | 0.5 | | 0.5 | | | |
| Stearic | 18:0 | 2.3 | 2.7 | 1.8 | 2.4 | 3.1 | 4.4 | 2.5 | 1.9 | 1.9 | 2.6 | 4.0 | 4.7 | 4.0 | 13.5 | 11 | 22.5 | 1 | 1.0 | 7.4 |
| Arachidic | 20:0 | 0.1 | 0.1 | | | 1.5 | 0.2 | 0.5 | 0.9 | 0.6 | 0.4 | 0.3 | 0.4 | | | 2 | | 0.5 | | |
| Behenic | 22:0 | | | | | 3.0 | | | 0.3 | 0.2 | 0.2 | 0.1 | | | | | | | | |
| Lignoceric | 24:0 | | | | | 1.0 | | | | 0.2 | 0.1 | | | | | | | | | |
| TOTAL | | 28.0 | 91.9 | 22.7 | 82.0 | 20.3 | 50 | 9.0 | 23.3 | 6.8 | 13.87 | 15.5 | 12.6 | 9.6 | 42.0 | 60.5 | 52.0 | 3.5 | 2.0 | 22.0 |
| | | | | | | | | | | | | | | | | | | | | |
| Unsaturated | | | | | | | | | | | | | | | | | | | | |
| Myristoleic | 14:1 w-5 | | | | | | | | | | | | | | | | 0.5 | | | |
| Palmitoleic | 16:1 w-7 | 0.7 | | | | 0.5 | | 0.1 | 0.2 | | 0.6 | 0.1 | 0.1 | | 4 | 2 | 2.5 | | | 0.8 |
| Heptadecenoic | 17:1 w-15 | | | | | | | | | | 0.09 | | | | 0.5 | 3 | 0.5 | | | |
| Oleic | 18:1 w-9 | 17.6 | 6.4 | 24.2 | 15.4 | 38.0 | 37.5 | 19.0 | 42.3 | 64.1 | 76.9 | 23.4 | 18.6 | 15.9 | 43 | 26 | 43 | 16 | 3.0 | 47.5 |
| Linoleic | 18:2 w-6 | 53.3 | 1.6 | 58.0 | 2.4 | 41.0 | 10 | 24.1 | 31.9 | 18.7 | 7.5 | 53.2 | 68.2 | 71.8 | 9 | 2.5 | 1.5 | 20 | 4.2 | 28.7 |
| Linolenic | 18:3 w-3 | 0.3 | | 0.7 | | | | 47.4 | 1.2 | 9.2 | 0.6 | 7.8 | 0.5 | 2.0 | 0.5 | 4 | | | 0.3 | 1.0 |
| Gadolenic | 20:1 w-9 | | | | | 1.0 | 0.5 | | 0.5 | 1.0 | 0.3 | | | | 1 | | | 0.5 | | |
| TOTAL | | 72.0 | 8.1 | 77.3 | 18.0 | 79.7 | 50 | 91 | 76.7 | 93.2 | 86.13 | 84.5 | 87.4 | 90.4 | 58.0 | 37.5 | 48.0 | 54.5 | 7.5 | 78.0 |
| | | | | | | | | | | | | | | | | | | | | |
| Polyunsaturated | | | | | | | | | | | | | | | | 2 | | 4 | | |
| Ricinoleic | 18 | | | | | | | | | | | | | | | | | | 89.5 | |
| Rosin acids | --- | | | | | | | | | | | | | | | | | 40 | | |
| | | | | | | | | | | | | | | | | | | | | |
| wt% FFA | | 0.5-0.6 | 1.0-3.5 | 1.7 | 0.1 | 0.8 | 2-14 | 2 | 5-15 | 0.5-3.8 | 0.5-3.3 | 0.3-1.6 | 0.1-1.5 | 0.3 | 0.5 | | 5-20 | | | |

Figure 2

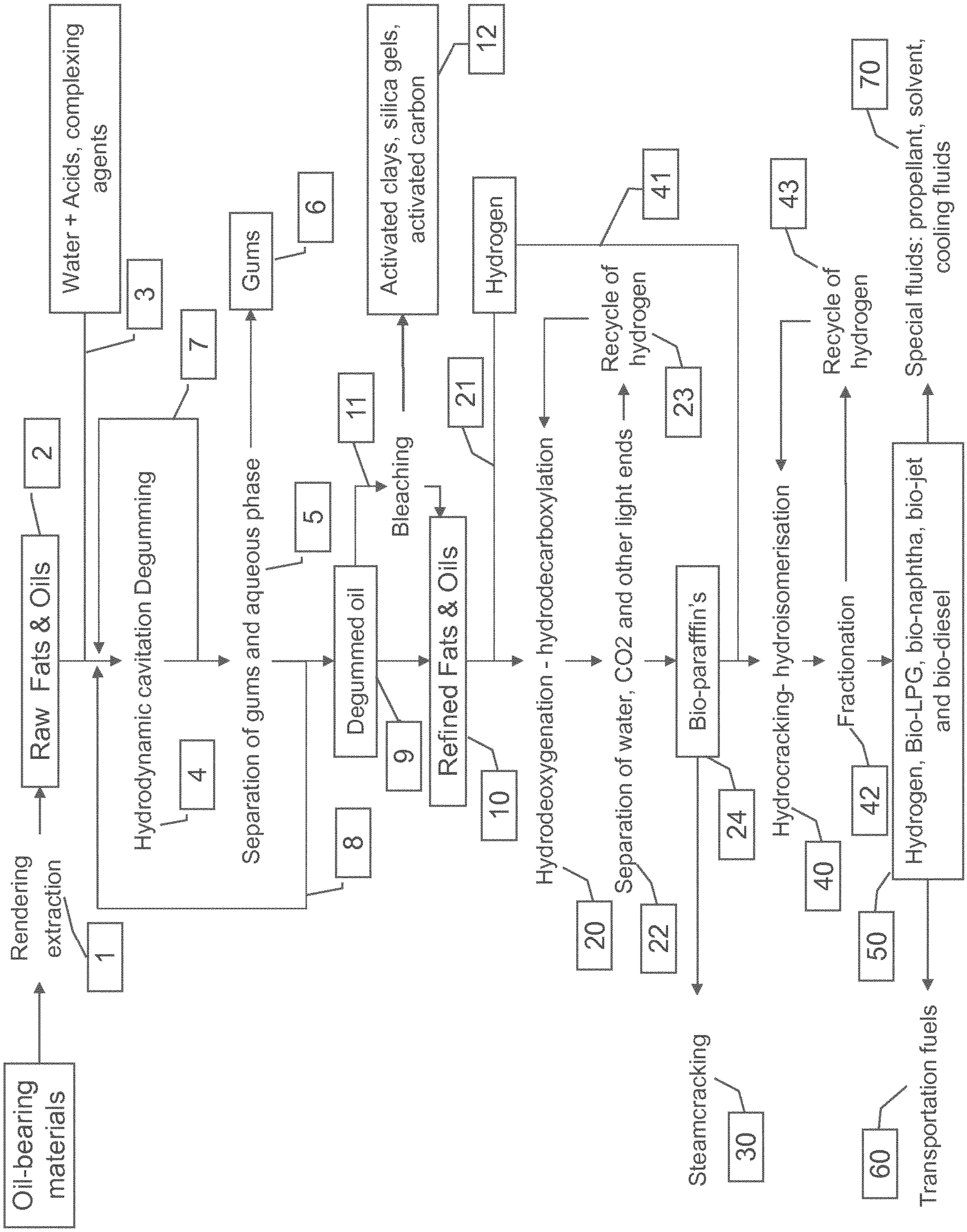
Oil-bearing materials
Rendering extraction
1
Raw Fats & Oils
2
Water + Acids, complexing agents
3
Hydrodynamic cavitation Degumming
4
7
8
Separation of gums and aqueous phase
5
Gums
6
Degummed oil
9
11
Bleaching
Activated clays, silica gels, activated carbon
12
Refined Fats & Oils
10
Hydrogen
21
Hydrodeoxygenation - hydrodecarboxylation
20
Recycle of hydrogen
23
Separation of water, CO2 and other light ends
22
41
Bio-paraffin's
24
Steamcracking
30
Hydrocracking- hydroisomerisation
40
Recycle of hydrogen
43
Fractionation
42
Hydrogen, Bio-LPG, bio-naphtha, bio-jet and bio-diesel
50
Transportation fuels
60
Special fluids: propellant, solvent, cooling fluids
70

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070175795 A
- US 20040230085 A
- US 20070135669 A
- US 20070039240 A
- US 4554397 A
- US 2009314688 A
- US 2015210949 A
- WO 201098783 A1
- US 8911808 B2
- US 7762715 B2
- US 8042989 B2
- US 4992605 A


### Non-patent literature cited in the description


- **C. L. PETERSON ; D. L. REECE ; B. L. HAMMOND ; J. THOMPSON ; S. M. BECK.** processing, characterization and performance of eight fuels from lipids. *Applied Engineering in Agriculture.,* 1997, vol. 13 (1), 71-79
- **F. MA ; L.D. CLEMENTS ; M.A. HANNA.** The effect of catalyst, free fatty acids and water on transesterification of beef tallow. *Trans ASAE,* 1998, vol. 41 (5), 1261-1264
- **M. CANAKCI ; J. VAN GERPEN.** Bio-distillates production from oils and fats with high free fatty acids. *Trans. ASAE,* 2001, vol. 44, 1429-1436
- **Y. ZHANG ; M.A. DUBE ; D.D. MCLEAN ; M. KATES.** Bio-distillates production from waste cooking oil. 1. Process design and technological assessment. *Bioresour. Technol.,* 2003, vol. 89, 1-16
- **W.-H. WU ; T.A. FOGLIA ; W.N. MARMER ; R.O. DUNN ; C.E. GOERING ; T.E. BRIGGS.** *J. Am. Oil Chem. Soc.,* 1998, vol. 75 (9), 1173
- **ALBERT J. DIJKSTRA.** About water degumming and the hydration of non-hydratable Phosphatides. *Eur. J. Lipid Sci. Technol.,* 2017, vol. 119, 1600496
- The lipid handbook
- **SONNTAG, N.** *J. Am. Oil. Chem. Soc.,* 1979, vol. 56, 729
- Bailey's Industrial Oil and Fat Products. John Wiley & Sons, 2005
- **W.H. CRAIG ; D.W. SOVERAN.** Production of hydrocarbons with relatively high cetane rating. *Hydrodeoxygenation of fats & oils has been reported,* 1989
- **GUSMAO J ; BRODZKI D ; DJÉGA-MARIADASSOU G ; FRETY R.** Utilization of vegetable oils as an alternative source for diesel-type fuel: Hydrocracking on reduced Ni/SiO2 and sulphided Ni-Mo/γ-Al2O3. *Cat. Today,* 1989, vol. 5, 533
- **E. FURIMSKY.** *Applied Catalysis A, General,* 2000, vol. 199, 147-190
- **W.F. MAIER.** *Chemische Berichte,* 1982, vol. 115, 808-812
- **I. KUBICKOVA.** *Catalysis Today,* 2005, vol. 106, 197-200
- **M. SNARE.** *Industrial Engineering, Chemistry Research,* 2006, vol. 45, 5708-5715
- **A. ZHANG ; Q. MA ; K. WANG ; X. LIU ; P. SHULER ; Y. TANG.** Naphthenic acid removal from crude oil through catalytic decarboxylation on magnesium oxide. *Applied Catalysis A: General,* 2006, vol. 303, 103
- **A. MORE ; JOHN R. SCHLUP ; KEITH L. HOHN.** Preliminary Investigations of the Catalytic Deoxygenation of Fatty Acids. *AIChe, The 2006 annual meeting, San Francisco*
- **B. KITIYANAN ; C. UNG-JINDA ; V. MEEYOO.** Catalytic deoxygenation of oleic acid over ceria-zirconia catalysts. *AIChe The 2008 annual meeting*